(19) Europäisches Patentamt / European Patent Office / Office européen des brevets

(11) EP 4 300 842 A1

(12) EUROPEAN PATENT APPLICATION
published in accordance with Art. 153(4) EPC

(43) Date of publication:
03.01.2024 Bulletin 2024/01

(21) Application number: 22779181.1

(22) Date of filing: 02.04.2022

(51) International Patent Classification (IPC):
H04B 7/06 (2006.01)

(52) Cooperative Patent Classification (CPC):
H04B 7/06

(86) International application number:
PCT/CN2022/085171

(87) International publication number:
WO 2022/207001 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 02.04.2021 CN 202110363922

(71) Applicant: Huawei Technologies Co., Ltd.
Shenzhen, Guangdong 518129 (CN)

(72) Inventors:
• ZHANG, Yongping
  Shenzhen, Guangdong 518129 (CN)
• ZHANG, Min
  Shenzhen, Guangdong 518129 (CN)
• YU, Zheng
  Shenzhen, Guangdong 518129 (CN)
• GE, Shibin
  Shenzhen, Guangdong 518129 (CN)

(74) Representative: MERH-IP Matias Erny Reichl
Hoffmann
Patentanwälte PartG mbB
Paul-Heyse-Strasse 29
80336 München (DE)

(54) **CHANNEL STATE INFORMATION REPORTING METHOD AND RELATED APPARATUS**

(57) A channel state information reporting method and a related apparatus are disclosed. In the method, a terminal may obtain first configuration information, where the first configuration information indicates first rank restriction indication information and second rank restriction indication information, the first rank restriction indication information is used to obtain rank indicator RI information in first-type CSI information, the first-type CSI information has an association relationship with one reference signal resource group, the second rank restriction indication information is used to obtain RI information in second-type CSI information, and the second-type CSI information has an association relationship with one reference signal resource. The terminal sends a CSI report to a network device, where the CSI report includes the first-type CSI information or the second-type CSI information. It can be learned that in this method, two pieces of rank restriction indication information are used to respectively restrict RI information in a first part of a CSI report corresponding to a multi-TRP measurement hypothesis and that in a first part of a CSI report corresponding to a single-TRP measurement hypothesis, thereby reducing power consumption and consumption of calculation resources of the terminal.

CSI reporting method 100

| Network device | | Terminal device |

S101: Send first configuration information, where the first configuration information indicates first rank restriction indication information and second rank restriction indication information

S102: Receive the first configuration information

S103: Send a CSI report, where the CSI report includes first-type CSI information or second-type CSI information

S104: The network device receives the CSI report

FIG. 3

**Description**

This application claims priority to Chinese Patent Application No. 202110363922.9, filed with the China National Intellectual Property Administration on April 2, 2021 and entitled "CHANNEL STATE INFORMATION REPORTING METHOD AND RELATED APPARATUS", which is incorporated herein by reference in its entirety.

**TECHNICAL FIELD**

This application relates to the field of communication technologies, and in particular, to a channel state information reporting method and a related apparatus.

**BACKGROUND**

In a communication process of a wireless system, a network device needs to obtain channel state information (Channel State Information, CSI) of downlink channels between different transmission reception points (Transmission Reception Points, TRPs) and different terminals in advance. A CSI obtaining process may include CSI measurement. The CSI measurement may include two types: CSI measurement in single-TRP measurement hypothesis and CSI measurement in multi-TRP measurement hypothesis. The CSI obtaining process further includes reporting of a CSI report. A terminal reports the CSI report by using two levels of channel state information. The two levels of channel state information correspond to two parts: a first part of the CSI report and a second part of the CSI report. The first part of the CSI report is sent before the second part of the CSI report. The first part of the CSI report has a fixed payload size. Information included in the first part of the CSI report may be used to determine a bit length of information included in the second part of the CSI report. For example, the first part of the CSI report includes the following indication information: a rank indicator (rank Indication, RI), a channel quality indicator (channel quality indication, CQI), and reference resource indication information (CSI-RS resource indicator, CRI).

In CSI measurement and reporting in the single-TRP measurement hypothesis, for the RI information in the first part of the CSI report, the network device may set a range of RI values allowed to be selected for reporting by the terminal, in other words, restrict a range of RIs reported by the terminal. Such rank indicator restriction can reduce complexity of calculating the CSI by the terminal, so that CSI calculation is more effective. For example, for a terminal having only a 2-stream receiving capability, a range of rank indicators (rank indicators, RIs) allowed to be selected for reporting by the terminal is restricted to {1, 2} in rank indicator restriction information, thereby avoiding wastes of power consumption and calculation resources of the terminal.

In CSI measurement and reporting in the single-TRP hypothesis, for PMI information in the CSI report, to reduce interference to a neighboring cell, the network device may alternatively set, based on a higher layer parameter, a range of PMIs allowed to be selected for reporting by the terminal, in other words, restrict use of some PMIs through codebook subset restriction in CSI reporting. Therefore, the network device is prevented from using some transmission parameters determined through precoding, thereby avoiding strong interference to the neighboring cell.

Therefore, for CSI measurement and reporting in the multi-TRP measurement hypothesis, how to perform rank indicator restriction and/or codebook subset restriction is an urgent problem to be resolved.

**SUMMARY**

Embodiments of this application provide a channel state information reporting method and a related apparatus, to resolve rank indicator restriction and/or a codebook subset restriction corresponding to a multi-TRP measurement hypothesis.

According to a first aspect, this application provides a channel state information reporting method. The method may be applied to a terminal device, or a chip or a chip system on a terminal side. In the method, the terminal may obtain first configuration information. The first configuration information indicates first rank restriction indication information and second rank restriction indication information. The first rank restriction indication information is used to obtain RI information in first-type CSI information. The second rank restriction indication information is used to obtain RI information in second-type CSI information. The terminal sends a CSI report to a network device. The CSI report includes the first-type CSI information or the second-type CSI information.

A first part of the CSI report includes the first-type CSI information or the second-type CSI information.

The first-type CSI information has an association relationship with one reference signal resource group. The reference signal resource group is one of one or more reference signal resource groups determined from a reference signal resource set. The reference signal resource set includes K reference signal resources, where K is an integer greater than or equal to 2. The second-type CSI information has an association relationship with one of the K reference signal resources.

It can be learned that in this application, two pieces of rank restriction indication information may be used to respectively restrict RI information that is allowed to be selected for reporting and that is in first parts of CSI reports corresponding to a multi-TRP measurement hypothesis and a single-TRP measurement hypothesis, thereby reducing power consumption and consumption of calculation resources of the terminal.

In addition, in this application, it is considered that a load size of RI information in a first part of a CSI report depends on a measurement hypothesis (that is, one piece of RI information or two pieces of RI information); and in some configurations, whether the first part of the CSI report includes one piece of second-type CSI information or one piece of first-type CSI information is determined by the terminal based on a measurement result. To avoid a problem that a load of RI information in a first part of a CSI report is blurred and multiplied due to different quantities of RI information in different measurement hypotheses, in this application, the two pieces of rank restriction indication information (that is, the first rank restriction indication information is used to determine the RI information in the first-type CSI information, and the second rank restriction indication information is used to determine the RI information in the second-type CSI information) are used. Compared with a manner of using one piece of rank restriction indication information to determine one or two pieces of RI information, this avoids impact of loads of RI information that are in proportion to quantities of RI information because there is only one selection range in two measurement hypotheses, thereby ensuring consistency between loads of RI information in first parts of CSI reports in different measurement hypotheses. This helps further reduce complexity and a delay of processing CSI information on a network device side.

According to a second aspect, this application further provides a channel state information reporting method. The method may be applied to a network device, or a chip or a chip system on a network side. The method corresponds to the first aspect, and is described from the network side. The method includes: sending first configuration information, where the first configuration information indicates first rank restriction indication information and second rank restriction indication information, the first rank restriction indication information is used to first-type CSI information, and the second rank restriction indication information is used to obtain second-type CSI information; and receiving a CSI report from a terminal, where the CSI report includes the first-type CSI information or the second-type CSI information.

The first-type CSI information has an association relationship with one reference signal resource group. The reference signal resource group is one of one or more reference signal resource groups determined from a reference signal resource set. The reference signal resource set includes K reference signal resources, where K is an integer greater than or equal to 2. The second-type CSI information has an association relationship with one of the K reference signal resources.

It can be learned that in this application, the two pieces of rank restriction indication information may be used to respectively restrict RI information that is allowed to be selected for reporting and that is in first parts of CSI reports corresponding to a multi-TRP measurement hypothesis and a single-TRP measurement hypothesis, thereby reducing power consumption and consumption of calculation resources of the terminal.

In addition, in this application, the two pieces of rank restriction indication information (that is, the first rank restriction indication information is used to determine RI information in the first-type CSI information, and the second rank restriction indication information is used to determine RI information in the second-type CSI information) are used. Compared with a manner of using one piece of rank restriction indication information to determine RI information corresponding to two measurement hypotheses, this avoids impact of loads of RI information that are in proportion to quantities of RI information because there is only one selection range in two measurement hypotheses, thereby ensuring consistency between loads of RI information in first parts of CSI reports in different measurement hypotheses. This helps further reduce complexity and a delay of processing CSI information at the network device.

The following describes some optional implementations applicable to the first aspect or the second aspect.

For a terminal side, in an optional implementation, the method further includes: The terminal determines S reference signal resources from the reference signal resource set, where S is an integer greater than or equal to 1 and less than K. The second-type CSI information has an association relationship with one of the S reference signal resources. It can be learned that in this implementation, a quantity of reference signal resources is restricted, to reduce complexity of CSI measurement performed by the terminal.

For a network device side, in an optional implementation, the second-type CSI information has an association relationship with one of the S reference signal resources, and the S reference signal resources are some of the K reference signal resources. S is an integer greater than or equal to 1 and less than K.

In an optional implementation, the first rank restriction indication information is used to determine A first parameters and/or B second parameters. A and B are integers greater than or equal to 1. A sum of A and B is equal to M1. M1 is an integer greater than 1.

Optionally, the first parameter and the second parameter are integers greater than or equal to 1 and less than or equal to M1. Optionally, M1 may be equal to 4 or 8. A value of M1 determines a maximum candidate value of an RI value, and a receiving capability of the terminal may be four streams or eight streams. Therefore, the value of M1 is equal to 4 or 8, that is, the maximum candidate value of the RI value is 4 or 8. The first parameter has an association relationship with the second parameter. For example, a set including the A first parameters is a subset of a set {1, 2, 3, 4, ..., M1}, a set including the B second parameters is a subset of a set {1, 2, 3, 4, ..., M1}, and the set including the B second parameters is a complementary set of the set including the A first parameters, or an intersection set of the set including the B second parameters and the set including the A first parameters is an empty set.

The first parameter is an RIvalue allowed to be selected by the terminal, and the second parameter is an RI value forbidden to be selected by the terminal. In this way, that the first rank restriction indication information is used to obtain the rank indicator RI information in the first-type CSI information may include: determining the RI information in the reported first-type CSI information from the A first parameters, and/or prohibiting the RI information in the reported first-type CSI information from the B second parameters.

It can be learned that, in this implementation, RI information in a first part of a CSI report corresponding to a multi-TRP measurement hypothesis reported by the terminal may correspond to two RIvalues. The two RI values are RIvalues allowed to be reported in an RI value set indicated by the first rank restriction indication information, and cannot be any one of RI values other than those in the RI value set.

In an optional implementation, the first rank restriction indication information is further used to determine C third parameters and/or D fourth parameters, C and D are integers greater than or equal to 1, a sum of C and D is equal to M2, and M2 is an integer greater than 1.

Optionally, the third parameter and the fourth parameter are integers greater than or equal to 1 and less than or equal to M2.

It can be learned that in this implementation, the first rank restriction indication information is used to determine the A first parameters and/or the B second parameters, and determine the C third parameters and/or the D fourth parameters. That is, the first rank restriction indication information may be used to determine two RI value sets, for example, a first RI value set and a second RI value set. The first RI value set includes the A first parameters and/or the B second parameters, and the second RIvalue set includes the C third parameters and/or the D fourth parameters. Optionally, M2 may be equal to M1, or may not be equal to M1. This is not limited in this application. Optionally, M2 may be equal to 4 or 8.

Both the first parameter and the third parameter are RI values allowed to be selected for reporting by the terminal, and both the second parameter and the fourth parameter are RI values forbidden to be selected for reporting by the terminal.

It can be learned that in this implementation, RI information in a first part of a CSI report corresponding to a multi-TRP measurement hypothesis reported by the terminal may correspond to two RI values, and the two RI values respectively belong to the two RI value sets. In other words, in this implementation, two RI values corresponding to the RI information in the first-type CSI information are respectively one of the A first parameters and one of the C third parameters.

In an optional implementation, the first rank restriction indication information is used to determine P parameter combinations. Each parameter combination includes a plurality of parameters. P is an integer greater than or equal to 1. The plurality of parameters are integers greater than 1 and less than or equal to M3.

Optionally, M3 is an integer greater than or equal to 1. Optionally, M3 may be equal to 4 or 8.

Each parameter combination is a combination of RI values allowed to be selected for reporting by the terminal. Correspondingly, the plurality of parameters in each parameter combination are also RI values allowed to be selected for reporting by the terminal.

It can be learned that in this implementation, RI values corresponding to RI information in a first part of a CSI report corresponding to a multi-TRP measurement hypothesis reported by the terminal belong to a same parameter combination.

In an optional implementation, the second rank restriction indication information is used to determine E fifth parameters and F sixth parameters. E and F are integers greater than or equal to 1. A sum of E and F is equal to M4. M4 is an integer greater than 1. Optionally, M4 may be equal to 8.

Optionally, the fifth parameter and the sixth parameter are integers greater than or equal to 1 and less than or equal to M4.

The fifth parameter is an RI value allowed to be selected for reporting by the terminal, and the sixth parameter is an RI value forbidden to be selected for reporting by the terminal.

In an optional implementation, with reference to the corresponding implementations, AandEmeet

$$2\lceil log_2 A \rceil = \lceil log_2 E \rceil$$

, or AandE meet $\lceil 2log_2 A \rceil = \lceil log_2 E \rceil$ , where $\lceil \ \rceil$ represents a rounding up operation.

It can be learned that, in this implementation, it can be ensured that a load of RI information in a first part of a CSI report when the terminal reports a two-TRP measurement hypothesis is equal to a load of RI information in a first part of a CSI report when the terminal reports a single-TRP measurement hypothesis. Therefore, CSI report loads of the terminal are the same in different measurement hypotheses, thereby avoiding a receiving failure caused because the network device cannot determine a CSI report load.

In another optional implementation, with reference to the corresponding implementations, A, C, and E meet

$$\lceil log_2 A \rceil + \lceil log_2 C \rceil = \lceil log_2 E \rceil$$, or A, C, and E meet $$\lceil log_2(AC) \rceil = \lceil log_2 E \rceil$$.

It can be learned that RI values allowed to be reported in the two-TRP measurement hypothesis are two RI value sets. For example, one set includes A RI values allowed to be reported, and the other set includes C RI values allowed to be reported. E RI values are allowed to be reported in a single-TRP measurement hypothesis. Therefore,

$$\lceil \log_2 A \rceil + \lceil \log_2 C \rceil = \lceil \log_2 E \rceil$$ or $$\lceil log_2(AC) \rceil = \lceil log_2 E \rceil$$ can ensure a load of RI information in a first part of a CSI report when the terminal reports the multi-TRP measurement hypothesis is equal to a load of RI information in a first part of a CSI report when the terminal reports the single-TRP measurement hypothesis.

In still another optional implementation, with reference to the corresponding implementation, P and E meet

$$\lceil \log_2 P \rceil = \lceil \log_2 E \rceil$$, where $\lceil \ \rceil$ represents a rounding up operation.

It can be learned that P RI value combinations are allowed to be reported in a multi-TRP measurement hypothesis, and E RI values are allowed to be reported in a single-TRP measurement hypothesis. Therefore,

$$\lceil \log_2 P \rceil = \lceil \log_2 E \rceil$$ can ensure a load of RI information in a first part of a CSI report when the terminal reports the multi-TRP measurement hypothesis is equal to a load of RI information in a first part of a CSI report when the terminal reports the single-TRP measurement hypothesis.

In an optional implementation, the first-type CSI information includes first CSI measurement information.

The first CSI measurement information is obtained based on Z first interference measurement resources and a plurality of reference signal resources in the reference signal resource group associated with the first-type CSI information.

The first interference measurement resource is configured by the network device. The first interference measurement resource has an association relationship with the reference signal resource group associated with the first-type CSI information. Z is an integer greater than or equal to 1. The first CSI measurement information includes rank indicator RI information. The RI information has an association relationship with two first RI values. Each first RI value is one of the A first parameters, and each first RI value is not equal to any one of the B second parameters. That is, both the two first RI values corresponding to the rank indicator RI information in the first CSI measurement information are the A RI values allowed to be selected for reporting by the terminal, and are not B RI values forbidden to be selected for reporting by the terminal.

In another optional implementation, a first-type CSI report includes second CSI measurement information.

The second CSI measurement information is obtained based on Z second interference measurement resources and a plurality of reference signal resources in the reference signal resource group associated with the first-type CSI information.

The second interference measurement resource is configured by the network device. The second interference measurement resource has an association relationship with the reference signal resource group associated with the first-type CSI information. Alternatively, the second interference measurement resource has an association relationship with the plurality of reference signal resources in the reference signal resource group associated with the first-type CSI information. Z is an integer greater than or equal to 1. The second CSI measurement information includes rank indicator RI information. The RI information has an association relationship with a second RI value and a third RI value. The second RI value is equal to one of the A first parameters and not equal to any one of the B second parameters. The third RI value is equal to one of the C third parameters and not equal to any one of the D fourth parameters.

That is, the rank indicator RI information in the second CSI measurement information corresponds to the second RI value and the third value. The second value is the A RI values allowed to be selected for reporting by the terminal, and is not the B RI values forbidden to be selected for reporting by the terminal. The third value is the C RI values allowed to be selected for reporting by the terminal, and is not D RI values forbidden to be selected for reporting by the terminal.

In still another optional implementation, the first-type CSI report includes third CSI measurement information.

The third CSI measurement information is obtained based on Z third interference measurement resources and a plurality of reference signal resources in the reference signal resource group associated with the first-type CSI information.

The third interference measurement resource is configured by the network device. The third interference measurement resource has an association relationship with the reference signal resource group associated with the first-type CSI information. Alternatively, the third interference measurement resource has an association relationship with the plurality of reference signal resources in the reference signal resource group associated with the first-type CSI information. Z is an integer greater than or equal to 1. The third CSI measurement information includes rank indicator RI information.

The RI information has an association relationship with two RI values, and the two RI values are equal to a plurality of parameters in one of the P parameter combinations.

That is, both the two RI values corresponding to the rank indicator RI information in the third CSI measurement information are an RI value included in one of the P RI value combinations.

In an optional implementation, the second-type CSI information includes fourth CSI measurement information. The fourth CSI measurement information is obtained based on Z fourth interference measurement resources and the reference signal resource associated with the second-type CSI information.

The fourth interference measurement resource is configured by the network device. The fourth interference measurement resource has an association relationship with the reference signal resource associated with the second-type CSI information. Z is an integer greater than or equal to 1. The fourth CSI measurement information includes RI information. The RI information has an association relationship with a fourth RI value. The fourth RI value is equal to one of the E fifth parameters and not equal to any one of the F sixth parameters.

That is, the RI value corresponding to the RI information in the fourth CSI measurement information is the E RI values allowed to be selected for reporting by the terminal, and is not F RI values forbidden to be selected for reporting by the terminal.

According to a third aspect, this application further provides a channel state information reporting method. The method may be applied to a terminal device, or a chip or a chip system on a terminal side. In the method, the terminal may obtain second configuration information, where the second configuration information indicates first codebook subset information and second codebook subset information, the first codebook subset information is associated with a first reference signal resource subset, the second codebook subset information is associated with a second reference signal resource subset, and the first reference signal resource subset and the second reference signal resource subset are respectively associated with different transmission configuration indication states. The terminal sends a CSI report to a network device based on first codebook subset information and second codebook subset information.

It can be learned that in this application, two precoding indicators PMIs in the CSI report corresponding to a multi-TRP measurement hypothesis may be separately selected based on different codebook subset information, to avoid a problem that a signal transmitted by the network device causes strong interference to a neighboring cell due to a PMI reported by the terminal.

In addition, in this application, it is considered that different TRPs are located at different geographical locations and there is a low probability that PMIs corresponding to strong interference to a neighboring cell are the same. Two codebook subset information (that is, the first codebook subset information is used for PMI selection of one TRP on a corresponding interference measurement resource and a corresponding reference signal resource, and the second codebook subset information is used for PMI selection of another TRP on a corresponding interference measurement resource and a corresponding reference signal resource) is used. Compared with a PMI selection manner in which one piece of codebook subset information is used by two TRPs on a corresponding interference measurement resource and a corresponding reference signal resource, this can avoid a problem that CSI feedback is invalid or inaccurate due to an excessively small quantity of PMIs allowed to be selected due to codebook subset restriction.

According to a fourth aspect, this application further provides a channel state information reporting method. The method may be applied to a network device, or a chip or a chip system on a network side. The method corresponds to the third aspect, and is described from the network side. In the method, the network device sends second configuration information, where the second configuration information indicates first codebook subset information and second codebook subset information, the first codebook subset information is associated with a first reference signal resource subset, the second codebook subset information is associated with a second reference signal resource subset, and the first reference signal resource subset and the second reference signal resource subset are respectively associated with different transmission configuration indication states. The network device receives a CSI report from a terminal based on the first codebook subset information and the second codebook subset information.

It can be learned that in this application, two precoding indicators PMIs in the CSI report corresponding to a multi-TRP measurement hypothesis may be separately selected based on different codebook subset information, to avoid a problem that a signal transmitted by the network device causes strong interference to a neighboring cell due to a PMI reported by the terminal.

In addition, in this application, it is considered that different TRPs are located at different geographical locations and there is a low probability that PMIs corresponding to strong interference to a neighboring cell are the same. Two codebook subset information (that is, the first codebook subset information is used for PMI selection of one TRP on a corresponding interference measurement resource and a corresponding reference signal resource, and the second codebook subset information is used for PMI selection of another TRP on a corresponding interference measurement resource and a corresponding reference signal resource) is used. Compared with a PMI selection manner in which one piece of codebook subset information is used by two TRPs on a corresponding interference measurement resource and a corresponding reference signal resource, this can avoid a problem that CSI feedback is invalid or inaccurate due to an excessively small quantity of PMIs allowed to be selected due to codebook subset restriction.

The following describes some implementations applicable to the third aspect or the fourth aspect.

In an optional implementation, the first codebook subset information is used to determine G seventh parameters and H eighth parameters. G and H are integers greater than or equal to 1. A sum of G and H is equal to M5. The second codebook subset information is used to determine J ninth parameters and K tenth parameters. J and K are integers greater than or equal to 1. A sum of J and K is equal to M5. M5 is an integer greater than 1, and M5 is determined based on the second configuration information.

Optionally, M5 may be equal to a quantity of precoding included in a group of preset precoding. The first codebook subset information is used to determine, from the group of precoding, G pieces of precoding allowed to be selected for reporting PMI information by the terminal and H pieces of precoding forbidden to be selected for reporting PMI information by the terminal. The second codebook subset information is used to determine, from the group of precoding, J pieces of precoding allowed to be selected for reporting PMI information by the terminal and K pieces of precoding forbidden to be selected for reporting PMI information by the terminal. That is, the G seventh parameters are allowed precoding corresponding to the first codebook subset information, the H eighth parameters are forbidden precoding corresponding to the first codebook subset information, the J ninth parameters are allowed precoding corresponding to the second codebook subset information, and the K tenth parameters are forbidden precoding corresponding to the second codebook subset information.

In another optional implementation, the CSI report includes fifth CSI measurement information.

The fifth CSI measurement information is obtained based on Z fifth interference measurement resources and a first reference signal resource and a second reference signal resource in the reference signal resource group.

The fifth interference measurement resource is configured by the network device. The fifth interference measurement resource has an association relationship with the reference signal resource group. Alternatively, the fifth interference measurement resource has an association relationship with the first reference signal resource and the second reference signal resource in the reference signal resource group. Z is an integer greater than or equal to 1. The first reference signal resource belongs to the first reference signal resource subset, and the second reference signal resource belongs to the second reference signal resource subset.

The fifth CSI measurement information includes first PMI information and second PMI information. The first PMI information has an association relationship with one or more of the G seventh parameters, and the first PMI information has no association relationship with any one of the H eighth parameters. The second PMI information has an association relationship with one or more ninth parameters in the J eighth parameters, and the second PMI information has no association relationship with any one of the K tenth parameters.

In other words, the first PMI information in the fifth CSI measurement information has an association relationship with the G pieces of precoding allowed to be selected, and has no association relationship with the H pieces of precoding forbidden to be selected. The second PMI information in the fifth CSI measurement information has an association relationship with one or more of the J pieces of precoding allowed to be selected, and has no association relationship with the K pieces of precoding forbidden to be selected.

It can be learned that, in this implementation, the two pieces of PMI information are separately determined based on two pieces of codebook subset information. Compared with a manner of determining two pieces of PMI information based on one piece of codebook subset information, this can avoid a problem that CSI feedback is invalid or inaccurate due to an excessively small quantity of PMIs allowed to be selected due to codebook subset restriction.

In another optional implementation, the CSI report includes sixth CSI measurement information. The sixth CSI measurement information is obtained based on Z sixth interference measurement resources and one reference signal resource in the first reference signal resource subset. The sixth interference measurement resource is configured by the network device. The sixth interference measurement resource has an association relationship with the reference signal resource in the first reference signal resource subset. Z is an integer greater than or equal to 1. The sixth CSI measurement information includes third PMI information. The third PMI information has an association relationship with one or more of the G seventh parameters, and the third PMI information has no association relationship with any one of the H eighth parameters, and/or the CSI report includes seventh CSI measurement information, the seventh CSI measurement information is obtained based on Z seventh interference measurement resources and one reference signal resource in the second reference signal resource subset. The seventh interference measurement resource is configured by the network device. The seventh interference measurement resource has an association relationship with the reference signal resource in the first reference signal resource subset. Z is an integer greater than or equal to 1. The seventh CSI measurement information includes fourth PMI information. The fourth PMI information has an association relationship with one or more ninth parameters in the J eighth parameters. The fourth PMI information has no association relationship with any one of the K tenth parameters.

It can be learned that in this implementation, the PMI information for reporting corresponding to a single-TRP measurement hypothesis in a CSI report may be determined based on the Z sixth interference measurement resources, one reference signal resource in the first reference signal resource subset, and the G seventh parameters corresponding to the first codebook subset information. Alternatively, the reported PMI information may be determined based on the Z seventh interference measurement resources, one reference signal resource in the second reference signal resource subset, and the J eighth parameters corresponding to the second codebook subset information. This is not limited in this application.

According to a fifth aspect, this application further provides a communication apparatus, including a communication unit and a processing unit. The communication apparatus is configured to implement the method described in any one of the first aspect to the fourth aspect or the possible implementations of the first aspect to the fourth aspect.

In this aspect, the communication unit may alternatively be a transceiver, configured to send and/or receive data in any one of the first aspect to the fourth aspect. The processing unit may alternatively be a processor, configured to process the data in any one of the first aspect to the fourth aspect.

In this aspect, the communication apparatus may be a chip or a chip system, the communication unit may be a communication interface, an input and/or output circuit, or the like. The processing unit may be a processing circuit, a logic circuit, or the like.

According to a sixth aspect, this application provides a chip system. The chip system includes at least one processor, configured to support implementation of functions in any one of the first aspect to the fourth aspect, for example, receiving or processing data and/or information in the foregoing method.

In a possible design, the chip system further includes a memory. The memory is configured to store program instructions and data, and the memory is located inside the processor or outside the processor. The chip system may include a chip, or may include a chip and another discrete component.

According to a seventh aspect, this application further provides a communication apparatus. The communication apparatus includes at least one processor and a communication interface. The communication interface is configured to send and/or receive data. The at least one processor is configured to invoke a computer program stored in at least one memory, so that a downlink control channel transmission apparatus implements the method described in any one of the first aspect to the fourth aspect or the possible implementations of the first aspect to the fourth aspect.

According to an eighth aspect, this application further provides a channel state information reporting system. The channel state information reporting system includes at least a network device and a terminal. The network device is configured to implement the method described in any one of the second aspect or the fourth aspect or the possible implementations of the second aspect or the fourth aspect. The terminal is configured to implement the method described in any one of the first aspect or the third aspect or the possible implementations of the first aspect or the third aspect.

According to a ninth aspect, this application further provides a computer-readable storage medium. The computer-readable storage medium stores a computer program. When the computer program is run on one or more processors, the method described in any one of the first aspect to the fourth aspect or the possible implementations of the first aspect to the fourth aspect is implemented.

According to a tenth aspect, an embodiment of this application discloses a computer program product. When the computer program product runs on one or more processors, the method described in any one of the first aspect to the fourth aspect or the possible implementations of the first aspect to the fourth aspect is implemented.

**BRIEF DESCRIPTION OF DRAWINGS**

FIG. 1 is a schematic diagram of a communication system;
FIG. 2a is a schematic diagram of multi-DCI scheduling according to an embodiment of this application;
FIG. 2b is a schematic diagram of single-DCI scheduling according to an embodiment of this application;
FIG. 3 is a schematic flowchart of a CSI reporting method 100 according to an embodiment of this application;
FIG. 4 is a schematic flowchart of a CSI reporting method 200 according to an embodiment of this application;
FIG. 5 is a schematic diagram of a structure of a communication apparatus 500 according to an embodiment of this application;
FIG. 6 is a schematic diagram of a structure of a communication apparatus 600 according to an embodiment of this application; and
FIG. 7 is a schematic diagram of a structure of a chip according to an embodiment of this application.

**DESCRIPTION OF EMBODIMENTS**

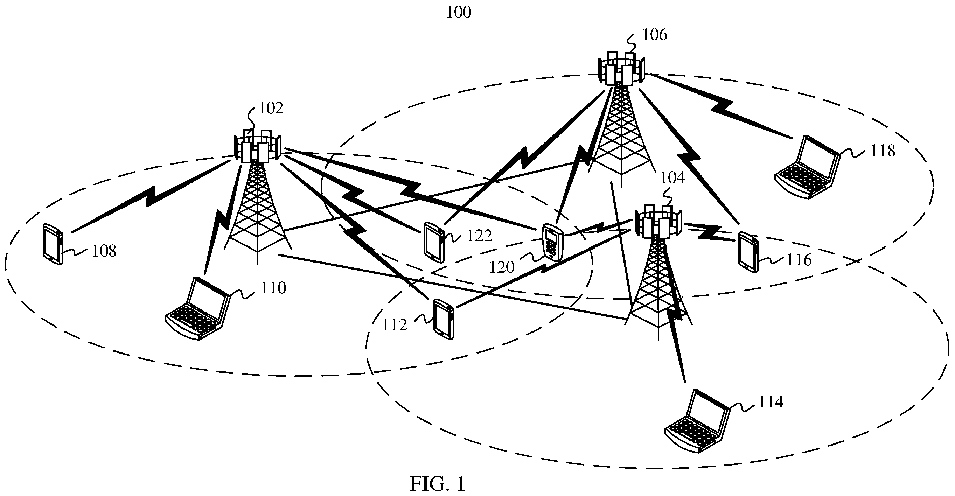

FIG. 1 is a schematic diagram of a wireless communication network 100 to which an embodiment of this application is applicable. As shown in FIG. 1, the wireless communication network 100 includes base stations 102 to 106 and terminal devices 108 to 122. The base stations 102 to 106 may communicate with each other through backhaul (backhaul) links (as shown by straight lines between the base stations 102 to 106). The backhaul link may be a wired backhaul link (for example, an optical fiber or a copper cable) or a wireless backhaul link (for example, a microwave).

The terminal devices 108 to 122 may communicate with the corresponding base stations 102 to 106 through wireless links (for example, as shown by fold lines between the base stations 102 to 106 and the terminal devices 108 to 122).

The base stations 102 to 106 usually provide, as access devices, wireless access services for the terminal devices 108 to 122 that generally serve as user equipment. Specifically, each base station corresponds to one service coverage area (which may also be referred to as a cellular, as shown in each elliptical area in FIG. 1), and a terminal device entering the area may communicate with the base station through a wireless signal, to receive the wireless access service provided by the base station. Service coverage areas of the base stations may overlap. A terminal device in an overlapping area may receive wireless signals from a plurality of base stations. Therefore, these base stations may coordinate with each other, to provide a service for the terminal device.

For example, the plurality of base stations may provide the service for the terminal device in the overlapping area by using a coordinated multipoint (Coordinated Multipoint, CoMP) technology. Optionally, the CoMP technology may include non-coherent joint transmission (Non-Coherent joint transmission, NCJT), that is, NCJT is one of CoMP technologies. For example, as shown in FIG. 1, a service coverage area of the base station 102 overlaps a service coverage area of the base station 104, and the terminal device 112 falls into an overlapping area. Therefore, the terminal device 112 may receive wireless signals from the base station 102 and the base station 104; and the base station 102 and the base station 104 may coordinate with each other, to provide a service for the terminal device 112. For another example, as shown in FIG. 1, a common overlapping area exists in service coverage areas of the base stations 102, 104, and 106, and a terminal device 120 falls into the overlapping area. Therefore, the terminal device 120 may receive wireless signals from the base stations 102, 104, and 106; and the base stations 102, 104, and 106 may coordinate with each other, to provide a service for the terminal device 120.

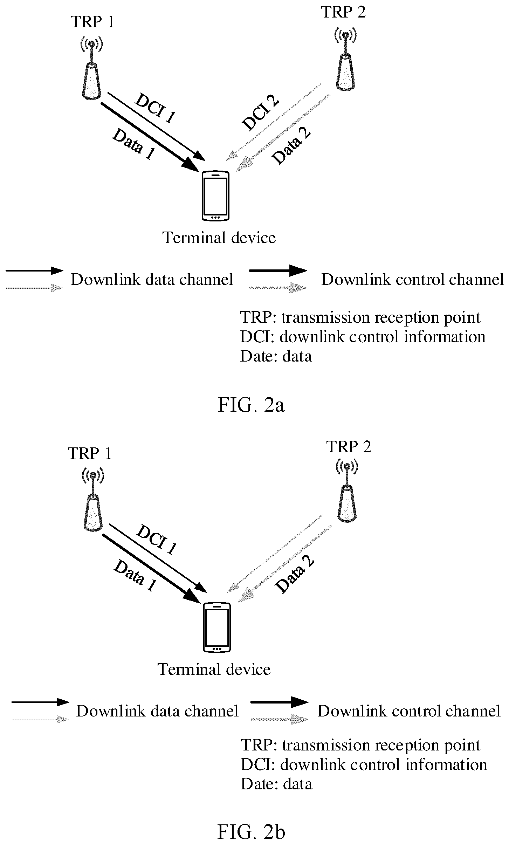

There may be two manners in which a plurality of base stations coordinate to provide a service: a multi-downlink control information (Downlink control information, DCI) manner, as shown in FIG. 2a, and a single DCI manner, as shown in FIG. 2b. For example, a TRP 1 and a TRP 2 coordinate with each other to provide a service for the terminal device. In the multi-DCI manner, as shown in FIG. 2a, the TRP 1 and the TRP 2 each transmit one piece of DCI, and schedule two physical downlink shared channels (Physical downlink share channel, PDSCH). For example, data (Data) 1 and data 2 are separately carried and sent to the terminal device. One PDSCH is scheduled for one piece of DCI, and the DCI 1 and the DCI 2 are respectively sent to the terminal device by using different downlink control channels. Accordingly, the data 1 and the data 2 are respectively sent to the terminal device by using different downlink data channels. In the single-DCI manner, as shown in FIG. 2b, there is only one station in a TRP 1 and a TRP 2. For example, the TRP 1 transmits one piece of DCI and schedules one PDSCH. However, some streams/layers (corresponding to some demodulation reference signal (Demodulation reference signal, DMRS) ports) in the PDSCH are transmitted by the TRP 1, and other streams/layers (corresponding to some DMRS ports) are transmitted by the TRP 2.

Depending on a used wireless communication technology, a base station may also be a transmission reception point (Transmission Reception Point, TRP) NodeB (NodeB), an evolved NodeB (evolved NodeB, eNodeB), an access point (Access Point, AP), or the like. In addition, according to a size of a provided service coverage area, the base station may be further divided into a macro base station for providing a macro cell (Macro cell), a micro base station for providing a micro cell (Micro cell), a pico base station for providing a pico cell (Pico cell), a femto base station for providing a femto cell (Femto cell), and the like. As wireless communication technologies keep evolving, another name may be used for a future base station.

The base station usually includes a plurality of components, for example, but is not limited to a baseband part, a radio frequency part, and an antenna array part.

The baseband part is configured to perform a plurality of baseband processing operations, for example, but not limited to, encoding and decoding, modulation and demodulation, precoding, and time-frequency conversion. In a specific implementation process, the baseband part is generally implemented by, for example, but not limited to, a baseband unit (BaseBand Unit, BBU).

The radio frequency part is configured to perform a plurality of radio frequency processing operations, for example, but not limited to, intermediate frequency processing and filtering. In a specific implementation process, the radio frequency part is generally implemented by, for example, but not limited to, a radio frequency unit (Radio Frequency Unit, RFU).

An antenna array may be classified into an active antenna array and a passive antenna array, and transmits and receives a signal.

The base station has various product forms. For example, in a product implementation process, the BBU and the RFU may be integrated in a same device. The device is connected to the antenna array by using a cable (for example, but not limited to, a feeder). The BBU and the RFU may alternatively be separately disposed, and are connected by using an optical fiber, and communicate with each other by using, for example, but not limited to, a common public radio interface (Common Public Radio Interface, CPRI) protocol. In this case, the RFU is generally referred to as an RRU (Remote Radio Unit, remote radio unit), and is connected to the antenna array by using a cable. In addition, the RRU may alternatively be integrated the antenna array. For example, this structure is used in an active antenna unit (Active Antenna Unit, AAU) product in the current market.

In addition, the BBU may be further divided into a plurality of parts. For example, the BBU can be further divided into a central unit (Central Unit, CU) and a distributed unit (Distributed Unit, DU) based on real-time performance of processed services. The CU processes non-real-time protocols and services, and the DU processes physical layer protocols and real-time services. Further, some physical layer functions may alternatively be separated from the BBU or the DU and integrated into the AAU.

It can be learned from the foregoing that the base station may include a plurality of parts and have a plurality of different product forms. In this case, technical solutions described in embodiments of this application may relate to only one or more parts of the base station, or may relate to the entire base station. Therefore, the base station in embodiments of this application may be a base station product that includes only several parts used to implement the technical solutions in embodiments of this application, or may be the entire base station. The several parts may include, but are not limited to, one or more of the baseband part, the radio frequency part, the antenna array, the BBU, the RRU, the RFU, the AAU, the CU, and the DU described above. Further, the technical solutions provided in embodiments of this application may be implemented only by corresponding chips in the several parts. In each part, the technical solutions provided in embodiments of this application may relate to one chip, or may relate to a plurality of chips. It can be learned that the technical solutions provided in embodiments of this application may be implemented by the entire base station, may be implemented by several parts of the base station, or may be implemented by one or more chips in these parts, that is, implemented by one or more chips in the base station. For example, a technical solution may be implemented only by a part related to baseband processing in the base station. Further, the technical solution may be implemented by a BBU, a CU, a DU, a CU and a DU, an AAU, or one or more chips in these devices.

The terminal devices 108 to 122 may be various wireless communication devices having a wireless communication function, for example, but not limited to, a mobile cellular phone, a cordless phone, a personal digital assistant (Personal Digital Assistant, PDA), a smartphone, a notebook computer, a tablet computer, a wireless data card, a wireless modulator demodulator (Modulator demodulator, Modem), or a wearable device such as a smartwatch. With emergence of internet of things (Internet of Things, IOT) technologies and internet of vehicles (Vehicle-to-everything, V2X) technologies, more and more devices that do not have a communication function before, for example, but are not limited to, a household appliance, a transportation vehicle, a tool device, a service device, and a service facility, start to obtain a wireless communication function by configuring a wireless communication unit, access a wireless communication network, and accept remote control. Such a device has a wireless communication function because the device is configured with a wireless communication unit, and therefore also belongs to a scope of wireless communication devices. In addition, the terminal devices 108 to 122 may also be referred to as mobile stations, mobile devices, mobile terminals, wireless terminals, handheld devices, clients, or the like.

The base stations 102 to 106 and the terminal devices 108 to 122 may be equipped with a plurality of antennas, to support a MIMO (Multiple Input Multiple Output, Multiple Input Multiple Output) technology. Further, the base stations 102 to 106 and the terminal devices 108 to 122 may support both a single user MIMO (Single User MIMO, SU-MIMO) technology and a multi-user MIMO (Multi-User MIMO, MU-MIMO) technology. The MU-MIMO technology may be implemented based on a space division multiple access (Space Division Multiple Access, SDMA) technology. Because a plurality of antennas are configured, the base stations 102 to 106 and the terminal devices 108 to 122 may further flexibly support a single input single output (Single Input Single Output, SISO) technology, a single input multiple output (Single Input Multiple Output, SIMO) technology, and a multiple input single output (Multiple Input Single Output, MISO) technology, to implement various diversity (for example, but not limited to, transmit diversity and receive diversity) and multiplexing technologies. The diversity technology may include, for example, but not limited to, a transmit diversity (Transmit Diversity, TD) technology and a receive diversity (Receive Diversity, RD) technology. The multiplexing technology may be a spatial multiplexing (Spatial Multiplexing) technology. In addition, the foregoing technologies may further include a plurality of implementations. For example, the transmit diversity technology may include transmit diversity.

In addition, the base stations 102 to 106 and the terminal devices 108 to 122 may perform communication by using various wireless communication technologies.

With continuous development of communication theories and practice, more wireless communication technologies appear and gradually become mature. The wireless communication technology includes but is not limited to Wi-Fi, worldwide interoperability for microwave access (Worldwide Interoperability for Microwave Access, WiMAX), a 4th-generation (4th-generation, 4G) mobile communication system, a 5th-generation (5th-generation, 5G) mobile communication system, and a 6th-generation (6th-generation, 6G) mobile communication system defined by the 802.11 series standards. With continuous development of communication technologies, the technical solutions in embodiments of this application may be further applied to a subsequent evolved communication system, for example, a 7th-generation (7th-generation, 7G) mobile communication system. Unless otherwise stated, the technical solutions provided in embodiments of this application may be applied to the foregoing wireless communication technologies and wireless communication systems. The terms "system" and "network" can be interchanged with each other.

It should be noted that the wireless communication network 100 shown in FIG. 1 is only an example, and is not intended to limit the technical solutions of this application. A person skilled in the art should understand that in a specific implementation process, the wireless communication network 100 may further include another device, and a quantity of base stations and a quantity of terminal devices may be further configured based on a specific requirement.

For ease of understanding of embodiments of this application, the following descriptions are first provided before embodiments of this application are described.

First, in this application, "indication" may include direct indication, indirect indication, and joint indication with reference to other information. When a piece of indication information is described as indicating A, the indication information may directly indicate A or indirectly indicate A, but it does not necessarily indicate that the indication information carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and the other information has an association relationship with the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating same information. For example, a person skilled in the art should understand that a precoding matrix includes precoding vectors, and the precoding vectors in the precoding matrix may have a same part in terms of composition or another attribute.

Furthermore, specific indication manners may alternatively be various other indication manners, for example, but not limited to, the foregoing indication manners and various combinations thereof. Specific details of various indication manners are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receive end device. By way of example but not limitation, the configuration information may include one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

Second, in this application, the first, second, and various numbers are merely used for differentiation for convenient description, and are not intended to limit the scope of embodiments of this application. For example, the numbers are used to distinguish between different indication information, different parameters, or the like.

Third, "predefinition" or "preconfiguration" may be implemented by pre-storing corresponding code or a corresponding table in a device (for example, including a terminal device or a network device) or in another manner that can indicate related information. A specific implementation of "predefinition" or "preconfiguration" is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, "protocols" in embodiments of this application may be standard protocols in the communication field, for example, may include an LTE protocol, a new radio (new radio, NR) protocol, and a related protocol used for a future communication system. This is not limited in this application.

Fifth, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent: a, b, or c, a and b, a and c, b and c, or a, b, and c, where a, b, and c each may be singular or plural.

Sixth, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

To help understand embodiments of this application, the following briefly describes terms in embodiments of this application.

1. Reference signal

A channel state sounding signal may be transmitted between a network device and a terminal, to obtain channel state information (Channel State Information, CSI) between the network device and the terminal. The channel state sounding signal may include but is not limited to a reference signal, for example, a channel state information reference signal (Channel State Information Reference Signal, CSI-RS) or a non-zero power channel state information reference signal (Non-Zero Power Channel State Information Reference Signal, NZP CSI-RS). Correspondingly, for different reference signals, the network device may configure corresponding reference signal resources, so that the terminal receives the corresponding reference signals to estimate channel state information.

For ease of description, a reference signal is used as an example for description in this specification. Correspondingly, the network device may configure a reference signal resource for the terminal.

2. Reference signal resource and interference measurement resource

To support CSI measurement, the network device needs to configure a reference signal resource for the terminal. For example, the network device sends first configuration information. The first configuration information may be CSI report configuration information. The first configuration information is associated with configuration information of a reference signal resource. The configuration information of the reference signal resource is configured with one or more reference signal resource sets. The network device sends indication information by using signaling such as MAC-CE signaling. The terminal device determines one reference signal resource set from a plurality of reference signal resource sets based on the indication information.

It should be noted that, in an optional implementation, the first configuration information is sent to the terminal by using RRC signaling. In the foregoing configuration process, the network device may configure, for the terminal at a time, as many reference signal resource sets as possible that may need to be measured, and indicate, by using MAC-CE signaling, one reference signal resource set that needs to be measured recently. Therefore, RRC reconfiguration can be greatly reduced, and a large scheduling interruption delay caused by the RRC reconfiguration can be reduced.

The determined reference signal resource set includes K reference signal resources, where K is an integer greater than or equal to 2. The configuration information of the reference signal resource may be used by the terminal device to determine N reference signal resource groups, where N is an integer greater than or equal to 1. Each reference signal resource group includes a plurality of reference signal resources. The plurality of reference signal resources included in each reference signal resource group belong to a same reference signal resource set. The reference signal resource may be a non-zero power channel state information reference signal resource (non-zero power channel state information reference signal resource, NZP CSI-RS resource). The reference signal resource is a resource used for channel measurement.

The configuration information of the reference signal resource may be further associated with one interference measurement resource set. The interference measurement resource set includes a plurality of interference measurement resources. The interference measurement resource may be a non-zero power channel state information reference signal resource (non-zero power channel state information reference signal resource, NZP CSI-RS resource), or may be a channel state information interference measurement resource (channel state information interference measurement resource, CSI-IM resource).

The terminal device may obtain multi-user interference based on the NZP CSI-RS resource, or may obtain inter-cell interference based on the CSI-IM resource. Each reference signal resource has an association relationship with one interference measurement resource in one interference measurement resource set. Each reference signal resource group has an association relationship with one or two interference measurement resources in one measurement resource set.

In an optional implementation, the terminal device may receive indication information of the network device. The indication information indicates an association relationship between each of the reference signal resource in the reference signal resource set and the reference signal resource group and the interference measurement resource in the interference measurement resource set. In another optional implementation, the terminal device determines the association relationship between each of the reference signal resource in the reference signal resource set and the reference signal resource group and the interference measurement resource in the interference measurement resource set according to a predefined rule.

The following is an example of determining the association relationship between each of the reference signal resource and the reference signal resource group and the interference measurement resource according to a predefined rule. It is assumed that the reference signal resource set includes two reference signal resources and two reference signal resource groups (the reference signal resource group may be explicitly included or implicitly included), and the interference measurement resource set associated with the reference signal resource set includes four interference measurement resources. That is:

a reference signal resource set: {reference signal resource 1, reference signal resource 2, reference signal resource group 1, reference signal resource group 2};
an interference measurement resource set: {interference measurement resource 1, interference measurement resource 2, interference measurement resource 3, interference measurement resource 4}.

In an optional implementation, the predefined rule may be that a reference signal resource in a reference signal resource set is sequentially associated with a corresponding quantity of interference measurement resources in an interference measurement resource set, and a reference signal resource group in the reference signal resource set is sequentially associated with one interference measurement resource in remaining interference measurement resources in the interference measurement resource set. According to the rule, the reference signal resource/reference signal resource group and the interference measurement resource that have an association relationship may be represented as: {reference signal resource 1, interference measurement resource 1}, {reference signal resource 2, interference measurement resource 2}, {reference signal resource group 1, interference measurement resource 3}, and {reference signal resource group 2, interference measurement resource 4}. The reference signal resource/reference signal resource group in the braces has an association relationship with the interference measurement resource.

In another optional implementation, the predefined rule may be that a reference signal resource in a reference signal resource set is sequentially associated with a corresponding quantity of interference measurement resources in an interference measurement resource set, and each reference signal resource in a reference signal resource group in the reference signal resource set is sequentially associated with one interference measurement resource in remaining interference measurement resources in the interference measurement resource set. A plurality of (for example, two) interference measurement resources associated with a plurality of (for example, two) reference signal resources in a same reference signal resource group have a same identifier of an interference measurement resource, that is, a same interference measurement resource. According to the rule, the reference signal resource/reference signal resource group and the interference measurement resource that have an association relationship may be represented as: {reference signal resource 1, interference measurement resource 1}, {reference signal resource 2, interference measurement resource 2}, {reference signal resource group 1, interference measurement resource 3, interference measurement resource 3 1, {reference signal resource group 2, interference measurement resource 4, interference measurement resource 4}. The reference signal resource/reference signal resource group in the braces has an association relationship with the interference measurement resource.

Alternatively, the configuration information of the reference signal resource may be further associated with another two interference measurement resource sets. A first interference measurement resource set includes a plurality of channel state information interference measurement resources. A second interference measurement resource set includes a plurality of non-zero power channel state information reference signal resources. Each reference signal resource has an association relationship with one interference measurement resource in the first interference measurement resource set, and has an association relationship with one interference measurement resource in the second interference measurement resource set. Each reference signal resource group has an association relationship with one or two interference measurement resources in the first interference measurement resource set, and has an association relationship with one or two interference measurement resources in the second interference measurement resource set.

CSI in a single-TRP measurement hypothesis is obtained through calculation based on the reference signal resource and an interference measurement resource associated with the reference signal resource. CSI in an NCJT measurement hypothesis is obtained through calculation based on a plurality of reference signal resources included in the reference signal resource group and an interference measurement resource associated with the plurality of reference signal resources.

In this application, there are two types of channel state information (channel state information, CSI) measurement: measurement based on a single-TRP measurement hypothesis, that is, the terminal assumes that subsequent data is sent from one TRP; and measurement based on a multi-TRP measurement hypothesis, that is, the terminal assumes that subsequent data is sent from a plurality of TRPs.

That different reference signal resources in a reference signal resource group are associated with different TRPs may be: From a perspective of the terminal, a plurality of reference signal resources in a same reference signal resource group are associated with a plurality of different transmission configuration indicator states (Transmission configuration indicator states, TCI states). From a perspective of the network device, the network device may configure different TCIs for a plurality of reference signal resources in a same reference signal resource group. The TCI state includes quasi co-location (Quasi co-location, QCL) information of the reference signal resource. The terminal may receive, based on the QCL information included in the TCI state, a reference signal sent by a corresponding TRP on the reference signal resource.

Optionally, the reference signal resource group may be referred to as a channel measurement resource pair (channel measurement resource pair, CMR pair). The reference signal resource may include an NZP CSI-RS resource, a CSI-RS resource, and the like. The multi-TRP measurement hypothesis may be a non-coherent joint transmission (Non-Coherent joint transmission, NCJT) measurement hypothesis.

3. CSI report

In this application, the first configuration information may further be used to configure that a CSI report reported by the terminal includes information of two options:

Option 1: CSI information in X single-TRP measurement hypothesis and CSI information in one multi-TRP measurement hypothesis; and
Option 2: CSI information in one single-TRP measurement hypothesis, or CSI information in one multi-TRP measurement hypothesis.

CSI in a single-TRP measurement hypothesis is obtained through calculation based on one reference signal resource in the reference signal resource set and an interference measurement resource associated with the reference signal resource.

CSI in an NCJT measurement hypothesis is obtained through calculation based on a plurality of reference signal resources included in one of the determined N reference signal resource groups and an interference measurement resource associated with the plurality of reference signal resources.

Optionally, X is an integer greater than or equal to 0, and X may be configured based on the first configuration information. For example, the first configuration information includes a value of X. Optionally, X may be an integer such as 0, 1, or 2.

The CSI information in the NCJT measurement hypothesis may include a plurality of parameters, for example, one piece of channel state information-reference signal resource indicator (channel state information-reference signal resource indicator, CRI) information and two pieces of rank indicator (rank indicator, RI) information. Optionally, which parameters are further included in this first-type CSI information may be configured by the network device. For example, the first-type CSI information may further include one piece of channel quality indicator (CQI, Channel quality indicator) information, two pieces of precoding matrix indicator (PMI, Precoding matrix indicator) information, two pieces of layer indicator (layer indicator, LI) information, and the like.

The CRI information indicates one RS resource group. The CQI information indicates channel quality. The PMI information indicates precoding matrix information. The LI information indicates layer information. In addition to the CRI information, other parameters such as two pieces of RI information, one piece of CQI information, two pieces of PMI information, and two pieces of LI information are obtained by the terminal through estimation based on two RS resources in the RS resource group indicated by the CRI information.

The CSI information in the single-TRP measurement hypothesis may include a plurality of parameters, for example, one piece of channel state information-reference signal resource indicator (channel state information-reference signal resource indicator, CRI) information and one piece of rank indicator (rank indicator, RI) information. The CRI information indicates one RS resource. This is different from that the first-type CSI information indicates one RS resource group. Optionally, which parameters are further included in this second-type CSI information may be configured by the network device. For example, the second-type CSI information may further include one piece of channel quality indicator (CQI, Channel quality indicator) information, one piece of precoding matrix indicator (PMI, Precoding matrix indicator) information, one piece of layer indicator (layer indicator, LI) information, and the like.

4. Reporting of a CSI report

In this application, the terminal uses a two-level channel state information reporting structure, that is, sends parameters in a CSI report to the network device based on two parts. A first part of the CSI report may be referred to as a channel state information part 1 (channel state information part 1, CSI Part 1), and a second part of the CSI report may be referred to as a CSI part 2.

In addition to a CRI and an RI, the first part of the CSI report may further include a CQI of a first transport block, one or more of quantities of non-zero amplitude coefficients, and the like. Which parameters are specifically included in the first part of the CSI report is configured by the network device. For example, when the network device configures the terminal to perform CSI measurement based on a type I codebook, the first part of the CSI report does not include a quantity of non-zero amplitude coefficients. All other parameters in the CSI report are included in the second part of the CSI report. The first part of the CSI report and the second part of the CSI report are separately coded and transmitted.

A load of the first part of the CSI report may be determined in advance; and a load of the second part of the CSI report is variable and is determined by parameters in the first part of the CSI report. For the CSI report reported by the terminal, the network device may determine the load of the first part of the CSI report based on the first configuration information, and then receive the load of the second part of the CSI report based on the load of the first part of the CSI report. It can be learned that correct receiving of the first part of the CSI report is a key for the network device to receive the entire CSI report.

An example in which the first part of the CSI report includes CRI information, RI information, broadband CQI information of the first transport block, and corresponding subband CQI information is used. The following briefly describes how to pre-determine the load of the first part of the CSI report.

(1) A load of the CRI information in the first part of the CSI report is determined based on a quantity of reference signal resources in the reference signal resource set and a quantity N of reference signal resource groups determined from the reference signal resource set.

(2) A load of the broadband CQI information of the first transport block in the first part of the CSI report is predefined in a protocol, and is a preset value, for example, 4 bits.

(3) A load of the subband CQI information of the first transport block in the first part of the CSI report is determined by a quantity of subbands and a quantity of bits of each subband. The quantity of bits of each subband is a preset value, for example, 2 bits are predefined in a protocol. The quantity of subbands may be preconfigured, or may be determined based on the CSI report configuration information.

(4) A load of the RI information in the first part of the CSI report relates to a measurement hypothesis type (such as a single-TRP measurement hypothesis and a multi-TRP measurement hypothesis). For example, first-type CSI information is obtained based on a two-TRP measurement hypothesis, that is, the first-type CSI information is separately obtained based on two RS resources in an associated reference signal resource group. In this case, the RI information in the first part of the CSI report corresponds to two RI values. One RI value is obtained through estimation based on one of the two RS resources. The other RI value is obtained through estimation based on the other RS resource in the two RS resources. Second-type CSI information is obtained based on a single-TRP measurement hypothesis, that is, the second-type CSI information is obtained based on an associated reference signal resource. In this case, the RI information in the first part of the CSI report corresponds to one RI value.

In this application, for ease of description, information that belongs to a first part of a CSI report and that is in CSI information in a multi-TRP measurement hypothesis is referred to as first-type CSI information, and information that belongs to a first part of a CSI report and that is in CSI information in a single-TRP measurement hypothesis is referred to as second-type CSI information. That is, the network device may configure the first part of the CSI report reported by the terminal to include X pieces of second-type CSI information and one piece of first-type CSI information. Alternatively, the network device may configure the first part of the CSI report reported by the terminal to include one piece of second-type CSI information or one piece of first-type CSI information. In addition, an embodiment of this application is described by using an example in which one reference signal resource group includes two reference signal resources.

For example, a first part of a CSI report includes a CRI, an RI, and a CQI of a first transport block, first-type CSI information and second-type CSI information are different as shown in Table 1, that is, the second-type CSI information needs to include two rank indicators.

**Table 1: CSI parameters included in the first part of the CSI**

| Second-type CSI information | First-type CSI information |
|---|---|
| One CRI | One CRI |
| One RI | Two RIs |
| CQI of the first transport block | CQI of the first transport block |

Currently, in CSI measurement and reporting in the single-TRP measurement hypothesis, for the RI information in the first part of the CSI report, the network device may set a range of RI values allowed to be selected for reporting by the terminal, that is, restrict a range of RIs reported by the terminal. For example, the network device may restrict, by using a higher-layer parameter, a range of RIs reported by the terminal in the first part of the CSI report. This technique is called rank indicator restriction (RI-Restriction). For example, the rank indicator restriction information may restrict the range of RIs allowed to be selected for reporting by the terminal to {1, 2, 3, 4}, and therefore, the first part of the CSI report can only include one value in {1, 2, 3, 4}. It can be learned that such restriction can reduce complexity of calculating CSI by the terminal, so that CSI calculation is more effective. For example, for a terminal having only a 2-stream receiving capability, in subsequent scheduling, it is impossible for the network device to schedule data transmission of more than two streams for the terminal. Therefore, CSI information that corresponds to RI information and whose rank value is greater than 2 in a CSI report reported by the terminal does not help subsequent scheduling, but calculation of the CSI information wastes power consumption and calculation resources of the terminal. Therefore, the rank indicator restriction information may restrict a range of RIs allowed to be selected for reporting by the terminal to {1, 2}. In this case, a rank value corresponding to the RI information reported by the terminal is less than or equal to 2. Correspondingly, other CSI information is also obtained when a rank value is less than or equal to 2, thereby avoiding wastes of power consumption and calculation resources of the terminal.

In CSI measurement and reporting in the single-TRP hypothesis, for PMI information in the CSI report, to reduce interference to a neighboring cell, the network device may alternatively set, based on a higher layer parameter, a range of PMIs allowed to be selected for reporting by the terminal. That is, use of some PMIs in CSI reporting is restricted. This technique may be referred to as codebook subset restriction (Codebook subset restriction, CBSR). That is, for some PMIs, when the network device sends data by using transmission parameters determined based on these PMIs, strong interference is caused to a neighboring cell. That is, although such precoding is optimal for the terminal, to avoid strong interference to the neighboring cell, the network device does not use the precoding to determine the transmission parameters.

Therefore, to resolve the problem in CSI measurement and reporting in a multi-TRP measurement hypothesis, how to perform rank indicator restriction and/or codebook subset restriction in CSI reporting in the multi-TRP measurement hypothesis becomes an urgent problem to be resolved.

This application provides a CSI reporting method 100. In the CSI reporting method 100, first configuration information indicates first rank restriction indication information and second rank restriction indication information. The first rank restriction indication information is used to determine RI information in first-type CSI information. The second rank restriction indication information is used to determine RI information in second-type CSI information. Further, a terminal may send a first part of a CSI report to a network device. The first part of the CSI report includes the first-type CSI information or the second-type information. It can be learned that in this application, two pieces of rank restriction indication information are used to respectively restrict RI information corresponding to a multi-TRP measurement hypothesis and a single-TRP measurement hypothesis, thereby reducing power consumption and consumption of calculation resources of the terminal.

In addition, in the CSI reporting method 100, it is considered that a load size of RI information in a first part of a CSI report depends on a measurement hypothesis (that is, one piece of RI information or two pieces of RI information); and in the option 2, whether the first part of the CSI report includes one piece of second-type CSI information or one piece of first-type CSI information is determined by the terminal based on a measurement result. In other words, when the network device configures the terminal to report the first part of the CSI report based on the option 2, the terminal may report CSI information (namely, second-type CSI information) in a single-TRP measurement hypothesis, or may report CSI information (namely, first-type CSI information) in a multi-TRP measurement hypothesis, which totally depends on a measurement result of the terminal.

Therefore, to ensure that the network device can correctly receive a first part of a CSI report and reduce reporting overheads, a problem that a load of RI information in a first part of a CSI report is blurred and multiplied due to different quantities of RI information in different measurement hypotheses is to be resolved. In the CSI reporting method 100, the two pieces of rank restriction indication information (that is, the first rank restriction indication information is used to determine RI information in the first-type CSI information, and the second rank restriction indication information is used to determine RI information in the second-type CSI information) are used. Compared with a manner of using one piece of rank restriction indication information to determine one or two pieces of RI information, the CSI reporting method 100 helps avoid impact of loads that are of RI information in first parts of CSI reports and that are in proportion to quantities of RI information because there is only one selection range of rank values, thereby ensuring consistency between loads of RI information in first parts of CSI reports in different measurement hypotheses. This helps further reduce complexity and a delay of processing CSI information on a network device side.

It should be noted that, CSI information reported by the terminal corresponds to different measurement hypotheses, and uncertainty of loads of first parts of CSI reports may be caused due to different quantities of reported RIs in different measurement hypotheses, and the CSI reporting method described in this application can be used to resolve the problem. This application is described by using an example in which both a single TRP measurement hypothesis and an NCJT measurement hypothesis are included.

This application further provides a CSI reporting method 200. In the CSI reporting method 200, second configuration information indicates first codebook subset information and second codebook subset information. The first codebook subset information is associated with a first reference signal resource subset. The second codebook subset information is associated with a second reference signal resource subset. The first reference signal resource subset and the second reference signal resource subset are respectively associated with different transmission configuration indication states. It can be learned that in this application, two PMIs in a CSI report corresponding to a multi-TRP measurement hypothesis may be separately selected from two pieces of codebook subset information, to avoid a problem that a signal transmitted by the network device causes strong interference to a neighboring cell due to a PMI reported by the terminal.

In addition, in CSI reporting method 200, it is considered that different TRPs are located at different geographical locations and there is a low probability that PMIs corresponding to strong interference to a neighboring cell are the same. Two codebook subset information (that is, the first codebook subset information is used for PMI selection on a reference signal resource corresponding to one TRP, and the second codebook subset information is used for PMI selection on a reference signal resource corresponding to another TRP) is used. Compared with a PMI manner in which one piece of codebook subset information is used on a reference signal resource corresponding to two TRPs, this can avoid a problem that CSI feedback is invalid or inaccurate due to an excessively small quantity of PMIs allowed to be selected due to codebook subset restriction.

Optionally, the CSI reporting method 100 and the CSI reporting method 200 may be separately implemented independently, or may be used in combination, to resolve the problem in a multi-TRP measurement hypothesis. This is not limited in this application.

Optionally, the first configuration information and the second configuration information may be same configuration information, for example, CSI report configuration CSI-ReportConfig and the like higher-layer parameters. Alternatively, the first configuration information and the second configuration information may be different configuration information. This is not limited in this application.

In addition, the network device described in this embodiment of this application may be a TRP in single-TRP transmission or one of two TRPs in coordinated transmission, or may be another network-side device different from the two TRPs. This is not limited in this application. For ease of description, this specification mainly describes a case in which two TRPs perform coordinated transmission, that is, a multi-TRP measurement hypothesis for two TRPs. A solution similar to that in this application may be used for coordinated transmission of three or more TRPs, that is, a measurement hypothesis of three or more TRPs. A difference is described in the following implementations, and same or similar parts are not described again.

The following further describes this application with reference to the accompanying drawings.

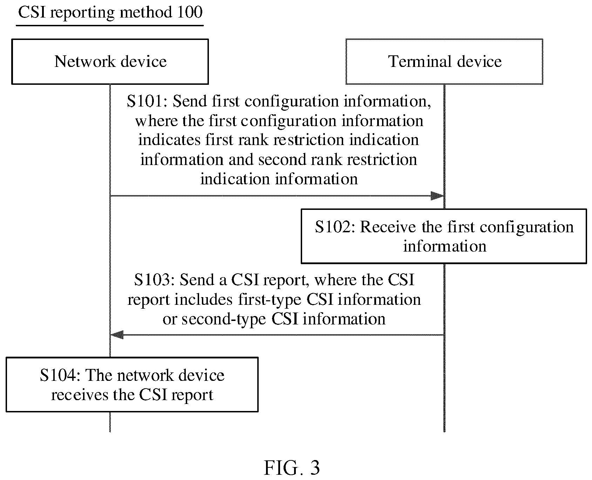

FIG. 3 is a schematic flowchart of a CSI reporting method 100 according to an embodiment of this application. As shown in FIG. 3, the CSI reporting method 100 may include but is not limited to the following steps.

S101: A network device sends first configuration information.

S102: A terminal receives the first configuration information.

Optionally, the first configuration information may be actively sent by the network device, or may be actively obtained by the terminal. This is not limited in this application.

The first configuration information indicates first rank restriction indication information and second rank restriction indication information. The first rank restriction indication information is used to obtain RI information in first-type CSI information. The second rank restriction indication information is used to obtain RI information in second-type CSI information.

The first configuration information may directly indicate the first rank restriction indication information and the second rank restriction indication information, may indirectly indicate the first rank restriction indication information and the second rank restriction indication information, or may indicate the first rank restriction indication information and the second rank restriction indication information based on other configuration information or signaling. This is not limited in this application. For example, an indirect manner may be: The first configuration information may include codebook configuration information. The codebook configuration information includes rank restriction information. The rank restriction information is used to determine the first rank restriction indication information and the second rank restriction indication information.

The first-type CSI information has an association relationship with one reference signal resource group. In other words, the first-type CSI information is obtained through measurement based on a multi-TRP measurement hypothesis. The reference signal resource group is one of one or more reference signal resource groups determined from a reference signal resource set. The reference signal resource set includes K reference signal resources. K is an integer greater than or equal to 2. Each reference signal resource group includes M reference signal resources, where M is an integer greater than or equal to 2. A value of M relates to a quantity of TRPs that participate in coordinated transmission. Optionally, M is determined by the network device, and the terminal may determine M corresponding reference signal resource subsets based on configuration information of reference signal resources, and then select one RS resource from each of the M reference signal resource subsets, to obtain one or more reference signal resource groups. Optionally, when a maximum quantity of TRPs participating in coordinated transmission is 2, M may be equal to 2.

The second-type CSI information has an association relationship with one of the K reference signal resources. In other words, the second-type CSI information is obtained through measurement based on a single-TRP measurement hypothesis. Specifically, for related content of the first-type CSI information and the second-type CSI information, refer to the foregoing descriptions. Details are not described herein again.

In an optional implementation, a quantity of reference signal resources is restricted, to reduce complexity of CSI measurement performed by the terminal. The method further includes: The terminal determines S reference signal resources from the reference signal resource set, where S is an integer greater than or equal to 1 and less than K. The second-type CSI information has an association relationship with one of the S reference signal resources. In other words, the terminal only needs to perform CSI measurement on the S reference signal resources and an interference measurement resource associated with the S reference signal resources to obtain the second-type CSI information, and does not need to perform CSI measurement on another reference signal resource (except the determined S reference signal resources) in the reference signal resource set.

S103: The terminal sends a CSI report to the network device.

S104: The network device receives the CSI report.

The CSI report includes the first-type CSI information or the second-type CSI information.

It can be learned that the CSI reporting method can reduce power consumption and consumption of calculation resources of the terminal, and help ensure consistency of loads of RI information in first parts of CSI reports in different measurement hypotheses, so that a load of a first part of a CSI report is fixed. This helps further reduce complexity and a delay of processing CSI information on a network device side.

For example, as shown in Table 1, in a single-TRP measurement hypothesis and a multi-TRP measurement hypothesis, a difference between parameters included in first parts of CSI reports is that in the multi-TRP measurement hypothesis, the terminal additionally reports one RI value. A bit length required by each RI value is determined by a quantity $n_{RI}$ of RI values allowed to be reported, that is, is equal to $\left\lceil \log_2 n_{RI} \right\rceil$. Therefore, if ranges of RI values that are allowed to be reported and that correspond to two measurement hypotheses are totally the same, for a single-TRP measurement hypothesis, a load of RI information in a first part of a CSI report is $\left\lceil \log_2 n_{RI} \right\rceil$; and for a multi-TRP measurement hypothesis, a load of RI information in a first part of a CSI report is $2 \left\lceil \log_2 n_{RI} \right\rceil$. It can be learned that different quantities of RI information in different measurement hypotheses result in a problem that a load of a first part of a CSI report is blurred and multiplied.

However, in this application, ranges of RI values that are allowed to be reported and that correspond to different measurement hypotheses are respectively obtained based on the first rank restriction indication information and the second rank restriction indication information.

For example, a quantity of RI values allowed to be reported corresponding to the multi-TRP measurement hypothesis is $n_{RI1}$, and a quantity of RI values allowed to be reported corresponding to the single-TRP measurement hypothesis is $n_{RI2}$. Therefore, for the single-TRP measurement hypothesis, the load of RI information in the first part of the CSI report is $\left\lceil \log_2 n_{RI2} \right\rceil$; and for the multi-TRP measurement hypothesis, the load of RI information in the first part of the CSI report is: $2 \left\lceil \log_2 n_{RI1} \right\rceil$ when two reported RI values respectively correspond to two independent fields (a manner 1), or $\left\lceil 2 \log_2 n_{RI1} \right\rceil$ when two RI values jointly correspond to one field (a manner 2). It can be learned that, loads of RI information in different measurement hypotheses are respectively $\left\lceil \log_2 n_{RI2} \right\rceil$, $2 \left\lceil \log_2 n_{RI1} \right\rceil$, or $\left\lceil 2 \log_2 n_{RI1} \right\rceil$. To keep the loads of the RI information in different measurement hypotheses consistent or not multiplied, when the manner 1 is used, only $\left\lceil \log_2 n_{RI2} \right\rceil$ needs to be equal to $2 \left\lceil \log_2 n_{RI1} \right\rceil$; and when the manner 2 is used, only $\left\lceil \log_2 n_{RI2} \right\rceil$ needs to be equal to $\left\lceil 2 \log_2 n_{RI1} \right\rceil$.

Therefore, this application can reduce power consumption and consumption of calculation resources of the terminal, and help ensure consistency of loads of RI information in first parts of CSI reports in different measurement hypotheses. This helps further reduce complexity and a delay of processing CSI information on a network device side.

In the CSI reporting method 100, the following describes some optional implementations in which the first rank restriction indication information is used to obtain the first-type CSI information and some optional implementations in which the second rank restriction indication information is used to obtain the second-type CSI information.

In an implementation 1.1, the first rank restriction indication information is used to determine A first parameters and/or B second parameters. A and B are integers greater than or equal to 1. A sum of A and B is equal to M1. M1 is an integer greater than 1.

The first parameter is an RI value allowed to be selected for reporting by the terminal, and the second parameter is an RI value forbidden to be selected for reporting by the terminal. In this way, the terminal may determine, from the A first parameters, the RI information in the first-type CSI information to be reported.

In one case, the first rank restriction indication information is used to determine the A first parameters. In this way, the terminal may obtain the RI value allowed to be selected for reporting. In another case, the first rank restriction indication information is used to determine the B second parameters. In this way, the terminal may obtain the RI value forbidden to be selected for reporting, to avoid selecting any one of the B second parameters when reporting the first-type CSI information. In still another case, the first rank restriction indication information is used to determine the A first parameters and the B second parameters. In this way, the terminal may learn the RI value allowed to be selected for reporting and the RI value forbidden to be selected for reporting.

An implementation of the first rank restriction indication information is described by using an example in which the first rank restriction indication information is used to determine the A first parameters and the B second parameters.

For example, the first rank restriction indication information is a bit sequence of 8 bits, for example, $r_7, r_6, ..., r_i, ..., r_1, r_0$. From right to left, when a least significant bit of $i$ is 1, $i+1$ is an RI value allowed to be reported; and when a least significant bit of $i$ is 0, $i+1$ is an RI value forbidden to be reported. It can be learned that the first rank restriction indication information indicates one RI value set, and the RI value set includes the A first parameters and the B second parameters. For example, when $r_0 = 0$, RI=1 is an RI value forbidden to be selected for reporting, and is one of the B second parameters. When $r_2 = 1$, RI=3 is an RI value allowed to be selected for reporting, and is one of the A first parameters. In addition, in this example, a maximum RI value in the RI value set may be 8.

For another example, the first rank restriction indication information is a 4-bit bit sequence, the foregoing rule is used as an example, and a maximum RI value in the RI value set indicated by the first rank restriction indication information is 4.

Optionally, if a maximum quantity of received streams of each terminal is 8, for a multi-TRP measurement hypothesis, RI values selected for two TRPs do not exceed 4. Therefore, optionally, M1 may be equal to 4, so that a quantity of data streams jointly sent by the two TRPs does not exceed the maximum quantity of received streams of the terminal.

A value of M1 determines a maximum candidate value of an RI value, and a receiving capability of the terminal may be four streams or eight streams. Therefore, the value of M1 is equal to 4 or 8, that is, the maximum candidate value of the RI value is 4 or 8. The first parameter has an association relationship with the second parameter. For example, a set including the A first parameters is a subset of a set of {1, 2, 3, 4, ..., M1}, a set including the B second parameters is a subset of a set of {1, 2, 3, 4, ..., M1}, and the set including the B second parameters is a complementary set of the set including the A first parameters, or an intersection set of the set including the B second parameters and the set including the A first parameters is an empty set.

In addition, in this implementation, RI information that is reported by the terminal and that is in a first part of a CSI report corresponding to a multi-TRP measurement hypothesis may correspond to two RI values. The two RI values are RI values allowed to be reported in an RI value set indicated by the first rank restriction indication information, and cannot be any one of RI values other than those in the RI value set.

In addition, for a case in which the first rank restriction indication information is used to determine the A first parameters and the B second parameters, the first-type CSI information in the CSI report may include first CSI measurement information. The first CSI measurement information is obtained based on Z first interference measurement resources and a plurality of reference signal resources (for example, two reference signal resources) in the reference signal resource group associated with the first-type CSI information. Z is an integer greater than or equal to 1.

The first interference measurement resource is configured by the network device. The first interference measurement resource has an association relationship with the plurality of reference signal resources in the reference signal resource group associated with the first-type CSI information.

Optionally, the first CSI measurement information includes rank indicator RI information. The RI information has an association relationship with two first RI values. Each first RI value is one of the A first parameters, and each first RI value is not equal to any one of the B second parameters. This helps avoid an RI reported by the terminal from being unavailable, and further avoids wastes of power consumption and calculation resources required for calculating corresponding CSI information.

Optionally, the first-type CSI information may further include first CRI information. The first CRI information indicates a reference signal resource group, that is, a reference signal resource group associated with the first-type CSI information, to notify the network device that the first CSI measurement information is obtained based on the plurality of reference signal resources in the reference signal resource group. Optionally, the first CSI measurement information further includes one or more of PMI information, CQI information, and LI information.

In an implementation 1.2, the first rank restriction indication information is used to determine the A first parameters and/or the B second parameters, and determine C third parameters and/or D fourth parameters.

Both the first parameter and the third parameter are RI values allowed to be selected for reporting by the terminal, and both the second parameter and the fourth parameter are RI values forbidden to be selected for reporting by the terminal.

That is, the first rank restriction indication information may be used to determine two RI value sets, for example, a first RI value set and a second RI value set. The first RI value set includes the A first parameters and/or the B second parameters, and the second RI value set includes the C third parameters and/or the D fourth parameters.

The term "and/or" indicates that each determined RI value set may not include RI values forbidden to be selected for reporting, may not include RI values allowed to be selected for reporting, or may include both the RI values forbidden and allowed to be selected for reporting.

A and B are integers greater than or equal to 1, and a sum of A and B is equal to M1. In addition, C and D are integers greater than or equal to 1, and a sum of C and D is equal to M2. M2 is an integer greater than 1. Optionally, M2 may be equal to M1, or may not be equal to M1. Optionally, M2 may be equal to 4, so that a quantity of data streams jointly sent by the two TRPs does not exceed the maximum quantity of received streams of the terminal.

Optionally, M2 may be equal to 8. In this way, this implementation may have better scalability and compatibility.

Similar to M1, a value of M2 determines a maximum candidate value of an RI value, and a receiving capability of the terminal may be four streams or eight streams. Therefore, the value of M2 is equal to 4 or 8, that is, the maximum candidate value of the RI value is 4 or 8.

In addition, the third parameter has an association relationship with the fourth parameter. For example, a set including the C third parameters is a subset of a set {1, 2, 3, 4, ..., M2}, a set including the D fourth parameters is a subset of a set {1, 2, 3, 4, ..., M2}, and the set including the D fourth parameters is a complementary set of the set including the C third parameters, or an intersection set of the set including the D fourth parameters and the set including the C third parameters is an empty set.

A difference between the implementation 1.2 and the implementation 1.1 lies in that: In the implementation 1.2, in the first part of the CSI report corresponding to the multi-TRP measurement hypothesis, two RI values corresponding to the RI information reported by the terminal respectively belong to the two RI value sets. In other words, in this implementation, two RI values corresponding to the RI information in the first-type CSI information are respectively one of the A first parameters and one of the C third parameters. For example, an RI value selected based on a reference signal resource corresponding to a TRP 1 is from a first RI value set, and an RI value selected based on a reference signal resource corresponding to a TRP 2 is from a second RI value set.

Optionally, for a case in which the first rank restriction indication information is used to determine the A first parameters, the B second parameters, the C third parameters, and the D fourth parameters, the first-type CSI information in the CSI report may include second CSI measurement information. The second CSI measurement information is obtained based on a plurality of reference signal resources (for example, two reference signal resources) in the reference signal resource group associated with the first-type CSI information. The second CSI measurement information includes rank indicator RI information. The RI information has an association relationship with a second RI value and a third RI value. The second RI value is equal to one of the A first parameters and not equal to any one of the B second parameters. The third RI value is equal to one of the C third parameters and not equal to any one of the D fourth parameters.

Optionally, the first-type CSI information may further include second CRI information. The second CRI information is used to indicate a reference signal resource group, that is, a reference signal resource group associated with the first-type CSI information, to notify the network device that the second CSI measurement information is obtained based on Z second interference measurement resources and the plurality of reference signal resources in the reference signal resource group. Optionally, the second CSI measurement information further includes one or more of PMI information, CQI information, and LI information.

Z is an integer greater than or equal to 1. The second interference measurement resource is configured by the network device. The second interference measurement resource has an association relationship with the reference signal resource group associated with the first-type CSI information. Alternatively, the second interference measurement resource has an association relationship with the plurality of reference signal resources in the reference signal resource group associated with the first-type CSI information.

In an implementation 1.3, the first rank restriction indication information is used to determine P parameter combinations, and each parameter combination includes a plurality of parameters.

Each parameter combination is a combination of RI values allowed to be selected for reporting by the terminal.

Correspondingly, the plurality of parameters in each parameter combination are RI values allowed to be selected for reporting by the terminal. P is an integer greater than or equal to 1. A quantity of parameters in each parameter combination is determined by a quantity of TRPs that participate in coordinated transmission. Therefore, for ease of description, in this application, an example in which the parameter combination includes two parameters is mainly used for description.

The plurality of parameters in each parameter combination are integers greater than or equal to 1 and less than or equal to M3. M3 may be an integer equal to 4 or 8. Because a possible maximum quantity of received streams of the terminal is 8, each parameter in the parameter combination may not exceed 4, that is, M3 is equal to 4. Optionally, M3 is equal to 8, and may have better scalability and compatibility. This is not limited in this application.

In other words, a value of M3 determines a maximum candidate value of an RI value, and a receiving capability of the terminal may be four streams or eight streams. Therefore, the value of M3 is equal to 4 or 8, that is, the maximum candidate value of the RI value is 4 or 8.

For example, coordinated transmission between two TRPs is used as an example. The first rank restriction indication information is used to determine P parameter combinations, as shown in Table 2, that is, P is equal to 4. That is, the RI information in the first-type CSI information may be one of 00, 01, 10, or 11, and two RI values corresponding to the RI information in the first-type CSI information belong to parameters in one parameter combination of the P parameter combinations, for example, $r_1$ and $r_2$. For example, two RI values in an RI value combination corresponding to each piece of RI information are integers less than or equal to 4.

**Table 2: Correspondence between RI information and RI value combinations**

| RI information | 00 | 01 | 10 | 11 |
|---|---|---|---|---|
| $r_1$ | 1 | 1 | 2 | 2 |
| $r_2$ | 1 | 2 | 1 | 2 |

In addition, a first-type CSI report includes third CSI measurement information. The third CSI measurement information is obtained based on a plurality of reference signal resources in a reference signal resource group associated with the first-type CSI information. The third CSI measurement information includes rank indicator RI information. The RI information has an association relationship with two RI values, and the two RI values are a plurality of parameters in one parameter combination of the P parameter combinations.

The first-type CSI information may further include third CRI information. The third CRI information indicates a reference signal resource group, that is, a reference signal resource group associated with the first-type CSI information, to notify the network device that the third CSI measurement information is obtained based on the plurality of reference signal resources in the reference signal resource group. Optionally, the third CSI measurement information further includes one or more of PMI information, CQI information, and LI information.

In an implementation 1.4, the second rank restriction indication information is used to determine E fifth parameters and F sixth parameters.

E and F are integers greater than or equal to 1. A sum of E and F is equal to M4. M4 is an integer greater than 1. The fifth parameter is an RI value allowed to be selected for reporting by the terminal, and the sixth parameter is an RI value forbidden to be selected for reporting by the terminal. Optionally, the fifth parameter and the sixth parameter are integers greater than or equal to 1 and less than or equal to M4.

A value of M4 determines a maximum candidate value of an RI value, and a receiving capability of the terminal may be four streams or eight streams. Therefore, the value of M4 is equal to 8, that is, the maximum candidate value of the RI value is 8.

In addition, the fifth parameter has an association relationship with the sixth parameter. For example, a set including the E fifth parameters is a subset of a set {1, 2, 3, 4, ..., M4}, a set including the F sixth parameters is a subset of a set {1, 2, 3, 4, ..., M4}, and the set including the E fifth parameters is a complementary set of the set including the F sixth parameters, or an intersection set of the set including the E fifth parameters and the set including the F sixth parameters is an empty set.

Optionally, because a maximum quantity of streams received by the terminal is 8, for a single-TRP measurement hypothesis, M4 may be equal to 8.

Optionally, for the implementation 1.4, refer to the implementation described in the implementation 1.1, to notify an RI value allowed to be selected for reporting by the terminal and an RI value forbidden to be selected for reporting by the terminal.

It can be learned that in the implementation 1.1 to implementation 1.4, the first rank restriction indication information is used to determine information about an RI value allowed to be reported in the multi-TRP measurement hypothesis, and the second rank restriction indication information is used to determine information about an RI value allowed to be reported in the single-TRP measurement hypothesis.

Optionally, a second-type CSI report includes fourth CSI measurement information. The fourth CSI measurement information is obtained based on Z fourth interference measurement resources and one reference signal resource associated with the second-type CSI information. The fourth CSI measurement information includes rank indicator RI information. The RI information has an association relationship with one RI value. The RI value is equal to one of the E fifth parameters.

Z is an integer greater than or equal to 1. The fourth interference measurement resource is configured by the network device. The fourth interference measurement resource has an association relationship with the reference signal resource associated with the second-type CSI information.

Optionally, the second-type CSI information may further include fourth CRI information. The fourth CRI information indicates a reference signal resource, that is, a reference signal resource associated with the second-type CSI information, to notify the network device that the fourth CSI measurement information is obtained based on the reference signal resource. Optionally, the fourth CSI measurement information further includes one or more of PMI information, CQI information, and LI information.

In an optional implementation, coordinated transmission between two TRPs is used as an example. The implementation 1.1 is combined with the implementation 1.4. A and E meet $2\lceil \log_2 A \rceil = \lceil \log_2 E \rceil$ or $[2log_2 A] = [log_2 E]$, where $\lceil \ \rceil$ represents a rounding-up operation. A RI values are allowed to be reported in a two-TRP measurement hypothesis, and E RI values are allowed to be reported in a single-TRP measurement hypothesis. Therefore, $2\lceil \log_2 A \rceil = \lceil \log_2 E \rceil$ or $[2log_2 A] = [log_2 E]$ can ensure a load of RI information in a first part of a CSI report when the terminal reports the two-TRP measurement hypothesis is equal to a load of RI information in a first part of a CSI report when the terminal reports the single-TRP measurement hypothesis. Therefore, CSI report loads of the terminal are the same in different measurement hypotheses, thereby avoiding a receiving failure caused because the network device cannot determine a CSI report load.

Optionally, because RI values allowed to be selected based on a reference signal resource corresponding to each TRP are in a same range, that is, belong to a same RI value set, for CSI reports corresponding to a plurality of TRPs, in this implementation, a product of a quantity of TRPs (or a quantity of TCI states) and $\lceil \log_2 A \rceil$ is restricted to be equal to $\lceil \log_2 E \rceil$, or a result of rounding up a product of a quantity of TRPs (or a quantity of TCI states) and $log_2 A$ is restricted to be equal to $\lceil \log_2 E \rceil$.

In another optional implementation, coordinated transmission between two TRPs is used as an example. The implementation 1.2 may be combined with the implementation 1.4. A, C, and E meet $\lceil \log_2 A \rceil + \lceil \log_2 C \rceil = \lceil \log_2 E \rceil$ or $[log_2(AC)] = [log_2 E]$, where $\lceil \ \rceil$ represents a rounding-up operation. It can be learned that RI values allowed to be reported in the two-TRP measurement hypothesis are two RI value sets. For example, one set includes A RI values allowed to be reported, and the other set includes C RI values allowed to be reported. E RI values are allowed to be reported in a single-TRP measurement hypothesis. Therefore, $\lceil \log_2 A \rceil + \lceil \log_2 C \rceil = \lceil \log_2 E \rceil$ or $[log_2(AC)] = [log_2 E]$ can ensure a load of RI information in a first part of a CSI report when the terminal reports a multi-TRP measurement hypothesis is equal to a load of RI information in a first part of a CSI report when the terminal reports a single-TRP measurement hypothesis.

Optionally, because a range of RI values allowed to be selected based on a reference signal resource corresponding to each TRP belongs to each RI value set, for the multi-TRP measurement hypothesis in this implementation, a sum of bits of RI values in an RI value set corresponding to each TRP (or each TCI state) is restricted to be equal to $\lceil \log_2 E \rceil$.

In still another optional implementation, the implementation 1.3 may be combined with the implementation 1.4. P and E meet $\lceil \log_2 P \rceil = \lceil \log_2 E \rceil$, where $\lceil \ \rceil$ represents a rounding-up operation. It can be learned that P RI value combinations are allowed to be reported in a two-TRP measurement hypothesis, and E RI values are allowed to be reported in a single-TRP measurement hypothesis. Therefore, $\lceil \log_2 P \rceil = \lceil \log_2 E \rceil$ can ensure a load of RI information in a first part of a CSI report when the terminal reports the multi-TRP measurement hypothesis is equal to a load of RI information in a first part of a CSI report when the terminal reports the single-TRP measurement hypothesis.

Optionally, because RI values allowed to be selected based on a reference signal resource corresponding to each TRP in the multi-TRP measurement hypothesis belong to a same RI value combination, in the multi-TRP measurement hypothesis, a quantity of RI values in the RI value combination is equal to a quantity of TRPs in coordinated transmission. Therefore, for the multi-TRP measurement hypothesis in this implementation, a quantity P of RI value combinations allowed to be selected is restricted to meet $\lceil \log_2 P \rceil = \lceil \log_2 E \rceil$.

In conclusion, in the CSI reporting method 100, with reference to the foregoing corresponding implementations, the network device may configure a plurality of rank restriction sets (that is, the foregoing RI value sets) for the terminal, and restrict required loads of RI values allowed to be reported in first parts of CSI reports to be the same in different measurement hypotheses, to ensure that in different measurement hypotheses, the network device determines a load of a first part of a CSI report based on a preset parameter, thereby preventing the network device from failing to learn the load of the first part of the CSI report due to different decisions of the terminal in the option 2.

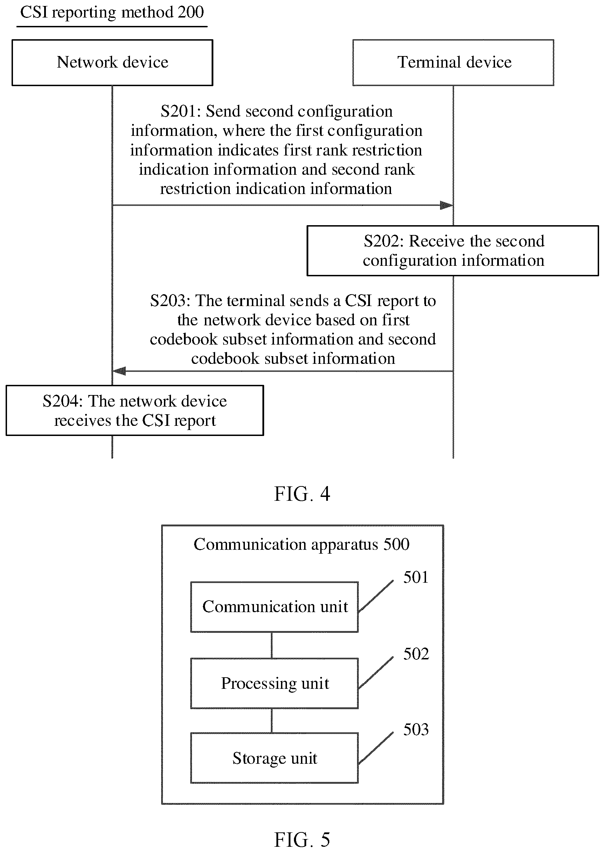

FIG. 4 is a schematic flowchart of a CSI reporting method 200 according to an embodiment of this application. As shown in FIG. 4, the CSI reporting method 200 may include but is not limited to the following steps.

S201: A network device sends second configuration information.

S202: A terminal receives the second configuration information.

As described above, the second configuration information and the first configuration information may be same configuration information, or may be different configuration information. This is not limited in this application. If the second configuration information and the first configuration information are different configuration information, the terminal may further obtain the first configuration information, to obtain the reference signal resource set and the N reference signal resource groups described above. Optionally, the second configuration information may be actively sent by the network device, or may be actively obtained by the terminal. This is not limited in this application.

The second configuration information indicates first codebook subset information and second codebook subset information. Optionally, the second configuration information may directly indicate the first codebook subset information and the second codebook subset information, may indirectly indicate the first codebook subset information and the second codebook subset information, or may indicate the first codebook subset information and the second codebook subset information based on other configuration information or signaling. This is not limited in this application. For example, an indirect manner may be as follows: The second configuration information may include codebook configuration (CodebookConfig) information. The codebook configuration information includes codebook subset configuration information (which may also be referred to as codebook subset restriction information). The codebook subset configuration information is used to determine the first codebook subset information and the second codebook subset information. Optionally, the codebook subset configuration information is used to determine the first codebook subset information and the second codebook subset information in a group of preset precoding.

The first codebook subset information is associated with a first reference signal resource subset. The second codebook subset information is associated with a second reference signal resource subset. The first reference signal resource subset and the second reference signal resource subset are respectively associated with different transmission configuration indication states. It can be learned that different TRPs are associated with different codebook subset information.

The first reference signal resource subset and the second reference signal resource subset may be determined based on the configuration information of the reference signal resource. The first reference signal resource subset includes a plurality of reference signal resources, and the first reference signal resource subset belongs to a reference signal resource set determined based on the configuration information of the reference signal resource. The second reference signal resource subset includes a plurality of reference signal resources, and the second reference signal resource subset also belongs to the reference signal resource set. In N reference signal groups determined based on the reference signal resource set, each reference signal resource group includes a plurality of reference signal resources. M reference signal resources included in a same reference signal resource group each belong to M reference signal resource subsets, and the plurality of reference signal resources included in each reference signal resource group belong to the reference signal resource set. It should be noted that, in actual configuration, a value of M is determined by a quantity of TRPs participating in coordinated transmission. Therefore, for ease of description, in this application, an example in which M is equal to 2 is mainly used for description.

Optionally, the configuration information of the reference signal resource may be associated with one interference measurement resource set, and the interference measurement resource set may include a plurality of interference measurement resources. Correspondingly, each reference signal resource in the first reference signal resource subset is associated with one or more interference measurement resources in the interference measurement resource set. Specifically, for an association relationship between the reference signal resource or the reference signal resource group and the interference measurement resource, refer to the foregoing descriptions. Details are not described herein again.

In an optional implementation, the first codebook subset information is used to determine G seventh parameters and H eighth parameters. G and H are integers greater than or equal to 1. A sum of G and H is equal to M5. The second codebook subset information is used to determine J ninth parameters and K tenth parameters. J and K are integers greater than or equal to 1. A sum of J and K is equal to M5. M5 is an integer greater than 1. Optionally, M5 is determined based on the second configuration information.

In addition, the seventh parameter has an association relationship with the eighth parameter. For example, a set including the G seventh parameters is a subset of a set {1, 2, 3, 4, ..., M5}, a set including the H eighth parameters is a subset of a set {1, 2, 3, 4, ..., M5}, and the set including the G seventh parameters is a complementary set of the set including the H eighth parameters, or an intersection set of the set including the G seventh parameters and the set including the H eighth parameters is an empty set.

In addition, the ninth parameter has an association relationship with the tenth parameter. For example, a set including the J ninth parameters is a subset of a set {1, 2, 3, 4, ..., M5}, a set including the J ninth parameters is a subset of a set {1, 2, 3, 4, ..., M5}, and the set including the J ninth parameters is a complementary set of the set including the K tenth parameters, or an intersection set of the set including the J ninth parameters and the set including the K tenth parameters is an empty set.

The seventh parameter and the eighth parameter are precoding allowed to be associated for reporting PMI information by the terminal. The seventh parameter is precoding allowed to be associated for reporting PMI information by the terminal on a corresponding reference resource in the first reference signal resource subset. The eighth parameter is precoding allowed to be associated for reporting PMI information by the terminal on a corresponding reference resource in the second reference signal resource subset. The ninth parameter and the tenth parameter are precoding forbidden to be associated for reporting PMI information by the terminal. The ninth parameter is precoding forbidden to be associated for reporting PMI information by the terminal on a corresponding reference resource in the first reference signal resource subset. The tenth parameter is precoding forbidden to be associated for reporting PMI information by the terminal on a corresponding reference resource in the second reference signal resource subset. That is, the G seventh parameters are allowed precoding corresponding to the first codebook subset information, the H eighth parameters are forbidden precoding corresponding to the first codebook subset information, the J ninth parameters are allowed precoding corresponding to the second codebook subset information, and the K tenth parameters are forbidden precoding corresponding to the second codebook subset information. Herein, "allowed" may be allowed to be selected by the terminal, or allowed to be associated for reporting the PMI information by the terminal; and "forbidden" may be forbidden to be selected by the terminal, or forbidden to be associated for reporting the PMI information by the terminal.

For example, the codebook subset configuration information may be two bit sequences: a bit sequence 1 and a bit sequence 2. A length of the bit sequence 1 is a sum of G and H, and a length of the bit sequence 2 is a sum of J and K. The sum of G and H is equal to the sum of J and K, and both the sum of G and H and the sum of J and K are equal to a quantity of precoding included in a group of preset precoding. Each bit in the bit sequence 1 corresponds to one piece of precoding in a group of preset precoding. Each bit in the bit sequence 2 corresponds to one piece of precoding in a group of preset precoding. In this way, the seventh parameter is precoding corresponding to a bit "1" in the bit sequence 1, and the eighth parameter is precoding corresponding to a bit "0" in the bit sequence 1. The ninth parameter is precoding corresponding to a bit "1" in the bit sequence 2, and the tenth parameter is precoding corresponding to a bit "0" in the bit sequence 1.

S203: The terminal sends a CSI report to the network device based on the first codebook subset information and the second codebook subset information.

S204: The network device receives the CSI report reported by the terminal.

Optionally, the CSI report includes fifth CSI measurement information. The fifth CSI measurement information is obtained based on Z fifth interference measurement resources and a first reference signal resource and a second reference signal resource in the reference signal resource group. The first reference signal resource belongs to the first reference signal resource subset, and the second reference signal resource belongs to the second reference signal resource subset. The fifth CSI measurement information includes first PMI information and second PMI information. The first PMI information has an association relationship with one or more of the G seventh parameters. The first PMI information has no association relationship with any one of the H eighth parameters. The second PMI information has an association relationship with one or more ninth parameters in the J eighth parameters. The second PMI information has no association relationship with any one of the K tenth parameters. It can be learned that in this implementation, for coordinated transmission between two TRPs, that is, a two-TRP measurement hypothesis, two pieces of PMI information may be reported, and the two pieces of PMI information respectively come from parameters determined by two pieces of codebook subset information.

Z is an integer greater than or equal to 1. The fifth interference measurement resource is configured by the network device. The fifth interference measurement resource has an association relationship with the reference signal resource group. Alternatively, the fifth interference measurement resource has an association relationship with the first reference signal resource and the second reference signal resource in the reference signal resource group.

Optionally, the CSI report includes sixth CSI measurement information. The sixth CSI measurement information is obtained based on Z sixth interference measurement resources and one reference signal resource in the first reference signal resource subset. Z is an integer greater than or equal to 1. The sixth interference measurement resource is configured by the network device. The sixth interference measurement resource has an association relationship with the reference signal resource.

The sixth CSI measurement information includes third PMI information, the third PMI information has an association relationship with one or more of the G seventh parameters, and the third PMI information has no association relationship with any one of the H eighth parameters; and/or the CSI report includes seventh CSI measurement information, the seventh CSI measurement information is obtained based on Z seventh interference measurement resources and one reference signal resource in the second reference signal resource subset. Z is an integer greater than or equal to 1. The seventh interference measurement resource is configured by the network device. The seventh interference measurement resource has an association relationship with the parameter signal resource. The seventh CSI measurement information includes fourth PMI information. The fourth PMI information has an association relationship with one or more ninth parameters in the J eighth parameters. The fourth PMI information has no association relationship with any one of the K tenth parameters.

It can be learned that in this implementation, for a single-TRP measurement hypothesis, in the CSI reporting method 200, the terminal may determine a PMI value based on the Z sixth interference measurement resources, one reference signal resource in the first reference signal resource subset, and the first codebook subset information, to report the PMI information. Alternatively, for a single-TRP measurement hypothesis, in the CSI reporting method 200, the terminal may determine a PMI value based on the Z seventh interference measurement resources, one reference signal resource in the second reference signal resource subset, and the second codebook subset information, to report the PMI information. Alternatively, for a single-TRP measurement assumption, in the CSI reporting method 200, the terminal may report two pieces of CSI measurement information. One piece of CSI measurement information is a PMI value determined based on the Z sixth interference measurement resource, one reference signal resource in the first reference signal resource subset, and the first codebook subset information, to report the PMI information. The other piece of CSI measurement information is a PMI value determined based on Z seventh interference measurement resources, one reference signal resource in the first reference signal resource subset, and the second codebook subset information, to report the PMI information.

It can be learned that in this application, for a multi-TRP measurement hypothesis, two pieces of codebook subset information are used to avoid a problem that a signal transmitted by the network device causes strong interference to a neighboring cell due to PMI information reported by the terminal. In addition, in the CSI reporting method 200, it is considered that different TRPs are located at different geographical locations. Compared with a manner in which one piece of codebook subset information is used by two TRPs to separately select PMI information on a corresponding interference measurement resource and a corresponding reference signal resource, using two pieces of codebook subset information can avoid a problem that CSI feedback is invalid or inaccurate due to an excessively small quantity of PMIs allowed to be selected due to codebook subset restriction.

In other words, in this application, the network side may restrict a plurality of sets of codebook subset restriction parameters (that is, codebook subset information) for the terminal, and each set of codebook subset restriction parameters has an association relationship with reference signals sent by different TRPs, so that a PMI corresponding to CSI estimated by the terminal based on a specific reference signal has an association relationship with only one or more pieces of precoding in an allowed precoding set. The allowed precoding set of a specific TRP is indicated by a configured codebook subset restriction parameter. When a TRP associated with the configured codebook subset restriction parameter sends a signal by using precoding included in the allowed precoding set, strong interference to a neighboring cell is not caused. In this way, a problem that CSI feedback is invalid or inaccurate due to an excessively small quantity of PMIs allowed to be selected due to codebook subset restriction is not caused when strong interference to a neighboring cell is not caused.

In the foregoing embodiments provided in this application, the methods provided in embodiments of this application are described separately from perspectives of the terminal and the network device. To implement functions in the foregoing methods provided in embodiments of this application, terminals and network devices may include a hardware structure, a software module, to implement the foregoing functions in a form of the hardware structure, the software module, or a combination of the hardware structure and the software module. One of the foregoing functions may be performed by using the hardware structure, the software module, or the combination of the hardware structure and the software module. The following describes in detail apparatuses in embodiments of this application with reference to FIG. 5 to FIG. 7. The apparatus is a terminal or a network device. Optionally, the apparatus may be a terminal or an apparatus in a network device.

FIG. 5 is a schematic block diagram of a communication apparatus 500. The communication apparatus 500 may perform related operations of the terminal or the network device in the foregoing method embodiments. The communication apparatus 500 may perform the channel state information reporting method 100 and some implementations thereof.

In a possible design, the communication apparatus 500 performs related operations of the terminal, and the communication apparatus 500 includes but is not limited to:
a communication unit 501, configured to obtain first configuration information, where the first configuration information indicates first rank restriction indication information and second rank restriction indication information.

The first rank restriction indication information is used to obtain RI information in first-type CSI information, and the first-type CSI information has an association relationship with a reference signal resource group.

The reference signal resource group is one of one or more reference signal resource groups determined from a reference signal resource set, and the reference signal resource set includes K reference signal resources, where K is an integer greater than or equal to 2.

The second rank restriction indication information is used to obtain RI information in second-type CSI information, and the second-type CSI information has an association relationship with one of the K reference signal resources.

The communication unit 501 is further configured to send a CSI report to the network device. The CSI report includes the first-type CSI information or the second-type CSI information.

A processing unit 502 is configured to determine the CSI report based on the first configuration information.

In another possible design, the communication apparatus 500 performs related operations of the network device, and the communication apparatus 500 includes but is not limited to:
a communication unit 501, configured to send first configuration information, where the first configuration information indicates first rank restriction indication information and second rank restriction indication information.

The first rank restriction indication information is used to obtain RI information in first-type CSI information, and the first-type CSI information has an association relationship with a reference signal resource group.

The reference signal resource group is one of one or more reference signal resource groups determined from a reference signal resource set, and the reference signal resource set includes K reference signal resources, where K is an integer greater than or equal to 2.

The second rank restriction indication information is used to obtain RI information in second-type CSI information, and the second-type CSI information has an association relationship with one of the K reference signal resources.

The communication unit 501 is further configured to receive a CSI report from the terminal. The CSI report includes the first-type CSI information or the second-type CSI information.

A processing unit 502 is configured to determine the CSI report based on the first configuration information.

In an optional implementation, the processing unit 502 is further configured to determine S reference signal resources from the reference signal resource set, where S is an integer greater than or equal to 1 and less than K. The second-type CSI information has an association relationship with one of the S reference signal resources.

In an optional implementation, the first rank restriction indication information is used to determine A first parameters and/or B second parameters. A and B are integers greater than or equal to 1. A sum of A and B is equal to M1. M1 is an integer greater than 1.

In an optional implementation, the first parameter and the second parameter are integers greater than or equal to 1 and less than or equal to M1.

In an optional implementation, the first rank restriction indication information is further used to determine C third parameters and/or D fourth parameters. C and D are integers greater than or equal to 1. A sum of C and D is equal to M2. M2 is an integer greater than 1.

In an optional implementation, the third parameter and the fourth parameter are integers greater than or equal to 1 and less than or equal to M2.

In an optional implementation, the first rank restriction indication information is used to determine P parameter combinations. Each parameter combination includes a plurality of parameters. P is an integer greater than or equal to 1. The plurality of parameters are integers greater than 1 and less than or equal to M3.

In an optional implementation, the second rank restriction indication information is used to determine E fifth parameters and F sixth parameters. E and F are integers greater than or equal to 1. A sum of E and F is equal to M3. M3 is an integer greater than 1.

In an optional implementation, the fifth parameter and the sixth parameter are integers greater than or equal to 1 and less than or equal to M3.

In an optional implementation, A and E meet $2\lceil log_2 A \rceil = \lceil log_2 E \rceil$, or A and E meet $2\lceil log_2 A \rceil = \lceil log_2 E \rceil$, where $\lceil \ \rceil$ represents a rounding up operation.

In another optional implementation, A, C, and E meet $\lceil \log_2 A \rceil + \lceil \log_2 C \rceil = \lceil \log_2 E \rceil$ ; or A, C, and E meet $\lceil \log_2(AC) \rceil = \lceil \log_2 E \rceil$ .

In an optional implementation, P and E meet $\lceil \log_2 P \rceil = \lceil \log_2 E \rceil$ , where $\lceil \ \rceil$ represents a rounding up operation.

In an optional implementation, the first-type CSI information includes first CSI measurement information. The first CSI measurement information is obtained based on Z first interference measurement resources and a plurality of reference signal resources in the reference signal resource group associated with the first-type CSI information. Z is an integer greater than or equal to 1 The first interference measurement resource is configured by the network device. The first interference measurement resource has an association relationship with the plurality of reference signal resources in the reference signal resource group associated with the first-type CSI information. The first CSI measurement information includes rank indicator RI information. The RI information has an association relationship with two first RI values. Each first RI value is one of the A first parameters. Each first RI value is not equal to any one of the B second parameters.

In an optional implementation, a first-type CSI report includes second CSI measurement information. The second CSI measurement information is obtained based on Z second interference measurement resources and a plurality of reference signal resources in the reference signal resource group associated with the first-type CSI information. Z is an integer greater than or equal to 1. The second interference measurement resource is configured by the network device. The second interference measurement resource has an association relationship with the reference signal resource group associated with the first-type CSI information. Alternatively, the second interference measurement resource has an association relationship with a plurality of reference signal resources in the reference signal resource group associated with the first-type CSI information. The second CSI measurement information includes rank indicator RI information. The RI information has an association relationship with a second RI value and a third RI value. The second RI value is equal to one of the A first parameters and not equal to any one of the B second parameters. The third RI value is equal to one of the C third parameters and not equal to any one of the D fourth parameters.

In an optional implementation, a first-type CSI report includes third CSI measurement information. The third CSI measurement information is obtained based on Z third interference measurement resources and a plurality of reference signal resources in the reference signal resource group associated with the first-type CSI information. Z is an integer greater than or equal to 1. The third interference measurement resource is configured by the network device. The third interference measurement resource has an association relationship with the reference signal resource group associated with the first-type CSI information. Alternatively, the third interference measurement resource has an association relationship with a plurality of reference signal resources in the reference signal resource group associated with the first-type CSI information. The third CSI measurement information includes rank indicator RI information. The RI information has an association relationship with two RI values, and the two RI values are equal to a plurality of parameters in one of the P parameter combinations.

In an optional implementation, the second-type CSI information includes fourth CSI measurement information. The fourth CSI measurement information is obtained based on Z fourth interference measurement resources and one reference signal resource associated with the second-type CSI information. Z is an integer greater than or equal to 1. The fourth CSI measurement information includes RI information. The fourth interference measurement resource is configured by the network device. The fourth interference measurement resource has an association relationship with the reference signal resource associated with the second-type CSI information. The RI information has an association relationship with a fourth RI value. The fourth RI value is equal to one of the E fifth parameters and not equal to any one of the F sixth parameters.

Optionally, the communication apparatus 500 may further include a storage unit 503, configured to store the first configuration information.

In another embodiment, the communication apparatus 500 may perform the channel state information reporting method 200 and some implementations thereof.

In a possible design, the communication apparatus 500 may perform related operations of the terminal, and the communication apparatus 500 may include but is not limited to:

a communication unit 101, configured to obtain second configuration information, where the second configuration information indicates first codebook subset information and second codebook subset information, the first codebook subset information is associated with a first reference signal resource subset, the second codebook subset information is associated with a second reference signal resource subset, and the first reference signal resource subset and the second reference signal resource subset are respectively associated with different transmission configuration indication states.

The communication unit 501 is further configured to send a CSI report to the network device based on the first codebook subset information and the second codebook subset information.

In a possible design, the communication apparatus 500 may perform related operations of the network device, and the communication apparatus 500 may include but is not limited to:

a communication unit 501, configured to send second configuration information, where the second configuration information indicates first codebook subset information and second codebook subset information, the first codebook subset information is associated with a first reference signal resource subset, the second codebook subset information is associated with a second reference signal resource subset, and the first reference signal resource subset and the second reference signal resource subset are respectively associated with different transmission configuration indication states.

The communication unit 501 is further configured to receive a CSI report from the terminal based on the first codebook subset information and the second codebook subset information.

The following describes some optional implementations of the communication apparatus 500.

In an optional implementation, the first codebook subset information is used to determine G seventh parameters and H eighth parameters. G and H are integers greater than or equal to 1. A sum of G and H is equal to M5. The second codebook subset information is used to determine J ninth parameters and K tenth parameters. J and K are integers greater than or equal to 1. A sum of J and K is equal to M5. M5 is an integer greater than 1, and M5 is determined based on the second configuration information.

Optionally, M5 may be equal to a quantity of precoding included in a group of preset precoding. The first codebook subset information is used to determine, from the group of precoding, G pieces of precoding information allowed to be associated for reporting PMI information by the terminal and H pieces of precoding information forbidden to be associated for reporting PMI information by the terminal. The second codebook subset information is used to determine, from the group of precoding, J pieces of precoding information allowed to be associated for reporting PMI information by the terminal and K pieces of precoding information forbidden to be associated for reporting PMI information by the terminal.

In another optional implementation, the CSI report includes fifth CSI measurement information.

The fifth CSI measurement information is obtained based on Z fifth interference measurement resources and a first reference signal resource and a second reference signal resource in the reference signal resource group.

The fifth interference measurement resource is configured by the network device. The fifth interference measurement resource has an association relationship with the reference signal resource group. Alternatively, the fifth interference measurement resource has an association relationship with the first reference signal resource and the second reference signal resource in the reference signal resource group. Z is an integer greater than or equal to 1. The first reference signal resource belongs to the first reference signal resource subset, and the second reference signal resource belongs to the second reference signal resource subset. The fifth CSI measurement information includes first PMI information and second PMI information. The first PMI information has an association relationship with one or more of the G seventh parameters, and the first PMI information has no association relationship with any one of the H eighth parameters. The second PMI information has an association relationship with one or more ninth parameters in the J eighth parameters, and the second PMI information has no association relationship with any one of the K tenth parameters.

In another optional implementation, the CSI report includes sixth CSI measurement information. The sixth CSI measurement information is obtained based on Z sixth interference measurement resources and one reference signal resource in the first reference signal resource subset. The sixth interference measurement resource is configured by the network device. The sixth interference measurement resource has an association relationship with the reference signal resource in the first reference signal resource subset. Z is an integer greater than or equal to 1. The sixth CSI measurement information includes third PMI information. The third PMI information has an association relationship with one or more of the G seventh parameters, and the third PMI information has no association relationship with any one of the H eighth parameters, and/or the CSI report includes seventh CSI measurement information, the seventh CSI measurement information is obtained based on Z seventh interference measurement resources and one reference signal resource in the second reference signal resource subset. The seventh interference measurement resource is configured by the network device. The seventh interference measurement resource has an association relationship with the reference signal resource in the first reference signal resource subset. Z is an integer greater than or equal to 1. The seventh CSI measurement information includes fourth PMI information. The fourth PMI information has an association relationship with one or more ninth parameters in the J eighth parameters. The fourth PMI information has no association relationship with any one of the K tenth parameters.

Optionally, the communication apparatus 500 may further include a storage unit 503, configured to store the first configuration information.

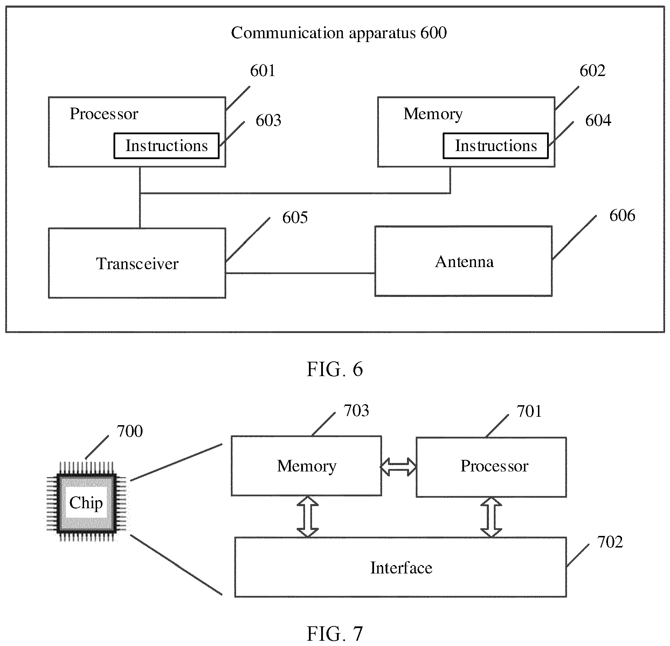

FIG. 6 is a schematic block diagram of a communication apparatus 600.

In an implementation, the communication apparatus 600 corresponds to the terminal in the foregoing channel state information reporting method. Optionally, the communication apparatus 600 is an apparatus in a terminal that performs the foregoing method embodiments, for example, a chip, a chip system, or a processor. The communication apparatus 600 may be configured to implement the methods described in the foregoing method embodiments. For details, refer to the description in the foregoing method embodiments.

In another implementation, the communication apparatus 600 corresponds to the network device in the foregoing channel state information reporting method. Optionally, the communication apparatus 600 is an apparatus in a network device that performs the foregoing method embodiments, for example, a chip, a chip system, or a processor. The communication apparatus 600 may be configured to implement the methods described in the foregoing method embodiments. For details, refer to the description in the foregoing method embodiments.

The communication apparatus 600 may include one or more processors 601. The processor 601 may be a general purpose processor, a dedicated processor, or the like. For example, the processor 601 may be a baseband processor or a central processing unit. The baseband processor may be configured to process a communication protocol and communication data, and the central processing unit may be configured to control a communication apparatus (for example, a base station, a baseband chip, a terminal, a terminal chip, a DU, or a CU) to execute a computer program, to process data of the computer program.

The communication apparatus 600 may further include a transceiver 605. The transceiver 605 may be referred to as a transceiver unit, a transceiver, a transceiver circuit, or the like, and is configured to implement a transceiver function. The transceiver 605 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 600 may further include an antenna 606.

Optionally, the communication apparatus 600 may include one or more memories 602. The memory 602 may store instructions 604. The instructions 604 may be a computer program. The computer program may be run on the communication apparatus 600, so that the communication apparatus 600 performs the method described in the foregoing method embodiments. Optionally, the memory 602 may further store data. The communication apparatus 600 and the memory 602 may be separately disposed, or may be integrated.

In an implementation, the communication apparatus 600 is configured to implement a function of the terminal device in the foregoing method embodiment.

The transceiver 605 is configured to perform step S102 in FIG. 3 and step S202 in FIG. 4.

Optionally, the processor 601 may perform a related operation of determining a CSI report according to first configuration information.

In another implementation, the communication apparatus 600 is configured to implement a function of the network device in the foregoing method embodiment.

The transceiver 605 is configured to perform steps S101 and S104 in FIG. 3, or steps S201 and S204 in FIG. 4.

Optionally, the processor 601 is configured to perform a related operation of determining second configuration information or a related operation of determining the first configuration information.

In an implementation, the processor 601 may include a transceiver configured to implement a receiving function and a sending function. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In an implementation, the processor 601 may store instructions 603. The instructions may be a computer program. The computer program 603 is run on the processor 601, to enable the communication apparatus 600 to perform the methods described in the foregoing method embodiments. The computer program 603 may be fixed in the processor 601. In this case, the processor 601 may be implemented by hardware.

In an implementation, the communication apparatus 600 may include a circuit, and the circuit may implement the sending, receiving, or communication function in the foregoing method embodiments. The processor and the transceiver described in this application may be implemented on an integrated circuit (integrated circuit, IC), an analog IC, a frequency integrated circuit (radio frequency integrated circuit, RFIC), a mixed-signal IC, an application-specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an n-type metal oxide semiconductor (nMetal-oxide-semiconductor, NMOS), a p-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiment may be an AP MLD or an AP of the AP MLD. However, a scope of the communication apparatus described in this application is not limited thereto, and a structure of the communication apparatus may not be limited by FIG. 6. The communication apparatus may be an independent device or may be a part of a large device.

For a case in which the communication apparatus may be the chip or the chip system, refer to a schematic diagram of a structure of a chip shown in FIG. 7. The chip shown in FIG. 7 includes a processor 701, an interface 702, and a memory 703. There may be one or more processors 701, and there may be a plurality of interfaces 702. The memory 703 may be configured to store related data or information, for example, the first configuration information or the second configuration information in this application.

The chip is configured to implement the functions of the terminal in the foregoing method embodiments.

The interface 702 is configured to perform steps S102 and S103 in FIG. 3, or steps S202 and S203 in FIG. 4.

Optionally, the processor 701 is configured to perform a related operation of determining a CSI report based on first configuration information.

Optionally, the chip may further perform functions of the network device in the foregoing method embodiments.

The interface 702 is configured to perform steps S101 and S104 in FIG. 3, or steps S201 and S204 in FIG. 4.

Optionally, the processor 701 is configured to determine first configuration information or a related operation of the first configuration information.

Optionally, the chip may further perform a related implementation in the foregoing method embodiments. Details are not described herein again. For example, optionally, the communication apparatus 700 may further perform the solutions described in the channel state information reporting method 100 to the channel state information reporting method 200. Details are not described herein again.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium storing a computer program. When the computer-readable storage medium is executed by a computer, the function in any one of the foregoing method embodiments is implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs. When the computer program is loaded and executed on a computer, the procedures or functions according to embodiments of this application are all or partially generated. The computer may be a generalpurpose computer, a dedicated computer, a computer network, or other programmable apparatuses. The computer program may be stored in a computer-readable storage medium or may be transmitted from a computer-readable storage medium to another computer-readable storage medium. For example, the computer program may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

**Claims**

1.  A channel state information reporting method, wherein the method comprises:

    obtaining configuration information, wherein the configuration information indicates first rank restriction indication information and second rank restriction indication information;
    the first rank restriction indication information is used to obtain rank indicator RI information in first-type CSI information, and the first-type CSI information has an association relationship with a channel measurement resource pair;
    the channel measurement resource pair is one of one or more channel measurement resource pairs determined from a reference signal resource set, and the reference signal resource set comprises K reference signal resources, wherein K is an integer greater than or equal to 2; and
    the second rank restriction indication information is used to obtain RI information in second-type CSI information, and the second-type CSI information has an association relationship with one of the K reference signal resources; and

sending a CSI report to a network device, wherein
the CSI report comprises the first-type CSI information or the second-type CSI information.

2. The method according to claim 1, wherein the method further comprises:

determining S reference signal resources from the reference signal resource set, wherein S is an integer greater than or equal to 1 and less than K; and
the second-type CSI information has an association relationship with one of the S reference signal resources.

3. The method according to claim 1, wherein the first rank restriction indication information is used to determine A first parameters and/or B second parameters, A and B are integers greater than or equal to 1, a sum of A and B is equal to M1, and M1 is an integer greater than 1.

4. The method according to claim 3, wherein the first rank restriction indication information is further used to determine C third parameters and/or D fourth parameters, C and D are integers greater than or equal to 1, a sum of C and D is equal to M2, and M2 is an integer greater than 1.

5. The method according to claim 1, wherein the first rank restriction indication information is used to determine P parameter combinations, each parameter combination comprises a plurality of parameters, P is an integer greater than or equal to 1, and the plurality of parameters are integers greater than 1 and less than or equal to M3.

6. The method according to any one of claims 1 to 5, wherein the second rank restriction indication information is used to determine E fifth parameters and F sixth parameters, E and F are integers greater than or equal to 1, a sum of E and F is equal to M4, and M4 is an integer greater than 1.

7. The method according to claim 3, wherein

the first-type CSI information comprises first CSI measurement information;
the first CSI measurement information is obtained based on Z first interference measurement resources and a plurality of reference signal resources in the channel measurement resource pair associated with the first-type CSI information, and Z is an integer greater than or equal to 1;
the first interference measurement resource is configured by the network device, and the first interference measurement resource has an association relationship with the plurality of reference signal resources in the channel measurement resource pair associated with the first-type CSI information;
the first CSI measurement information comprises rank indicator RI information; and
the RI information has an association relationship with two first RI values, each first RI value is one of the A first parameters, and each first RI value is not equal to any one of the B second parameters.

8. The method according to claim 6, wherein

a first-type CSI report comprises second CSI measurement information;
the second CSI measurement information is obtained based on Z second interference measurement resources and a plurality of reference signal resources in the channel measurement resource pair associated with the first-type CSI information, and Z is an integer greater than or equal to 1;
the second interference measurement resource is configured by the network device, and the second interference measurement resource has an association relationship with the channel measurement resource pair associated with the first-type CSI information, or the second interference measurement resource has an association relationship with the plurality of reference signal resources in the channel measurement resource pair associated with the first-type CSI information;
the second CSI measurement information comprises rank indicator RI information; and
the RI information has an association relationship with a second RI value and a third RI value, the second RI value is equal to one of the A first parameters and not equal to any one of the B second parameters, and the third RI value is equal to one of the C third parameters and not equal to any one of the D fourth parameters.

9. The method according to claim 5, wherein

a first-type CSI report comprises third CSI measurement information;
the third CSI measurement information is obtained based on Z third interference measurement resources and a plurality of reference signal resources in the channel measurement resource pair associated with the first-type CSI information, and Z is an integer greater than or equal to 1;

the third interference measurement resource is configured by the network device, and the third interference measurement resource has an association relationship with the channel measurement resource pair associated with the first-type CSI information, or the third interference measurement resource has an association relationship with the plurality of reference signal resources in the channel measurement resource pair associated with the first-type CSI information;

the third CSI measurement information comprises rank indicator RI information; and

the RI information has an association relationship with two RI values, and the two RI values are equal to a plurality of parameters in one of the P parameter combinations.

10. The method according to claim 6, wherein the second-type CSI information comprises fourth CSI measurement information;

the fourth CSI measurement information is obtained based on Z fourth interference measurement resources and the reference signal resource associated with the second-type CSI information, and Z is an integer greater than or equal to 1;

the fourth CSI measurement information comprises RI information;

the fourth interference measurement resource is configured by the network device, and the fourth interference measurement resource has an association relationship with the reference signal resource associated with the second-type CSI information; and

the RI information has an association relationship with a fourth RI value, the fourth RI value is equal to one of the E fifth parameters and not equal to any one of the F sixth parameters.

11. A channel state information reporting method, wherein the method comprises:

sending configuration information, wherein the configuration information indicates first rank restriction indication information and second rank restriction indication information;

the first rank restriction indication information is used to obtain RI information in first-type CSI information, and the first-type CSI information has an association relationship with a channel measurement resource pair;

the channel measurement resource pair is one of one or more channel measurement resource pairs determined from a reference signal resource set, and the reference signal resource set comprises K reference signal resources, wherein K is an integer greater than or equal to 2; and

the second rank restriction indication information is used to obtain RI information in second-type CSI information, and the second-type CSI information has an association relationship with one of the K reference signal resources; and

receiving a CSI report from a terminal, wherein

the CSI report comprises the first-type CSI information or the second-type CSI information.

12. The method according to claim 11, wherein the method further comprises:

determining S reference signal resources from the reference signal resource set, wherein S is an integer greater than or equal to 1 and less than K; and

the second-type CSI information has an association relationship with one of the S reference signal resources.

13. The method according to claim 11, wherein the first rank restriction indication information is used to determine A first parameters and/or B second parameters, A and B are integers greater than or equal to 1, a sum of A and B is equal to M1, and M1 is an integer greater than 1.

14. The method according to claim 13, wherein the first rank restriction indication information is further used to determine C third parameters and/or D fourth parameters, C and D are integers greater than or equal to 1, a sum of C and D is equal to M2, and M2 is an integer greater than 1.

15. The method according to claim 11, wherein the first rank restriction indication information is used to determine P parameter combinations, each parameter combination comprises a plurality of parameters, P is an integer greater than or equal to 1, and the plurality of parameters are integers greater than 1 and less than or equal to M3.

16. The method according to any one of claims 11 to 15, wherein the second rank restriction indication information is used to determine E fifth parameters and F sixth parameters, E and F are integers greater than or equal to 1, a sum of E and F is equal to M4, and M4 is an integer greater than 1.

17. The method according to claim 13, wherein

the first-type CSI information comprises first CSI measurement information;
the first CSI measurement information is obtained based on Z first interference measurement resources and a plurality of reference signal resources in the channel measurement resource pair associated with the first-type CSI information, and Z is an integer greater than or equal to 1;
the first interference measurement resource is configured by a network device, and the first interference measurement resource has an association relationship with the plurality of reference signal resources in the channel measurement resource pair associated with the first-type CSI information;
the first CSI measurement information comprises rank indicator RI information; and
the RI information has an association relationship with two first RI values, each first RI value is one of the A first parameters, and each first RI value is not equal to any one of the B second parameters.

18. The method according to claim 16, wherein:

a first-type CSI report comprises second CSI measurement information;
the second CSI measurement information is obtained based on Z second interference measurement resources and a plurality of reference signal resources in the channel measurement resource pair associated with the first-type CSI information, and Z is an integer greater than or equal to 1;
the second interference measurement resource is configured by a network device, and the second interference measurement resource has an association relationship with the channel measurement resource pair associated with the first-type CSI information, or the second interference measurement resource has an association relationship with the plurality of reference signal resources in the channel measurement resource pair associated with the first-type CSI information;
the second CSI measurement information comprises rank indicator RI information; and
the RI information has an association relationship with a second RI value and a third RI value, the second RI value is equal to one of the A first parameters and not equal to any one of the B second parameters, and the third RI value is equal to one of the C third parameters and not equal to any one of the D fourth parameters.

19. The method according to claim 15, wherein

a first-type CSI report comprises third CSI measurement information;
the third CSI measurement information is obtained based on Z third interference measurement resources and a plurality of reference signal resources in the channel measurement resource pair associated with the first-type CSI information, and Z is an integer greater than or equal to 1;
the third interference measurement resource is configured by a network device, and the third interference measurement resource has an association relationship with the channel measurement resource pair associated with the first-type CSI information, or the third interference measurement resource has an association relationship with the plurality of reference signal resources in the channel measurement resource pair associated with the first-type CSI information;
the third CSI measurement information comprises rank indicator RI information; and
the RI information has an association relationship with two RI values, and the two RI values are equal to a plurality of parameters in one of the P parameter combinations.

20. The method according to claim 16, wherein the second-type CSI information comprises fourth CSI measurement information;

the fourth CSI measurement information is obtained based on Z fourth interference measurement resources and the reference signal resource associated with the second-type CSI information, and Z is an integer greater than or equal to 1;
the fourth CSI measurement information comprises RI information;
the fourth interference measurement resource is configured by a network device, and the fourth interference measurement resource has an association relationship with the reference signal resource associated with the second-type CSI information; and
the RI information has an association relationship with a fourth RI value, the fourth RI value is equal to one of the E fifth parameters and not equal to any one of the F sixth parameters.

21. A communication apparatus, wherein the apparatus comprises:

a communication unit, configured to obtain configuration information, wherein the configuration information indicates first rank restriction indication information and second rank restriction indication information;
the first rank restriction indication information is used to obtain first-type CSI information, and the first-type CSI information has an association relationship with a channel measurement resource pair;
the channel measurement resource pair is one of one or more channel measurement resource pairs determined from a reference signal resource set, and the reference signal resource set comprises K reference signal resources, wherein K is an integer greater than or equal to 2;
the second rank restriction indication information is used to obtain second-type CSI information, and the second-type CSI information has an association relationship with one of the K reference signal resources;
the communication unit is further configured to send a CSI report to a network device; and
the CSI report comprises the first-type CSI information or the second-type CSI information.

22. The apparatus according to claim 21, wherein the apparatus further comprises:

determining S reference signal resources from the reference signal resource set, wherein S is an integer greater than or equal to 1 and less than K; and
the second-type CSI information has an association relationship with one of the S reference signal resources.

23. The apparatus according to claim 21, wherein the first rank restriction indication information is used to determine A first parameters and/or B second parameters, A and B are integers greater than or equal to 1, a sum of A and B is equal to M1, and M1 is an integer greater than 1.

24. The apparatus according to claim 23, wherein the first rank restriction indication information is further used to determine C third parameters and/or D fourth parameters, C and D are integers greater than or equal to 1, a sum of C and D is equal to M2, and M2 is an integer greater than 1.

25. The apparatus according to claim 21, wherein the first rank restriction indication information is used to determine P parameter combinations, each parameter combination comprises a plurality of parameters, P is an integer greater than or equal to 1, and the plurality of parameters are integers greater than 1 and less than or equal to M3.

26. The apparatus according to any one of claims 21 to 25, wherein the second rank restriction indication information is used to determine E fifth parameters and F sixth parameters, E and F are integers greater than or equal to 1, a sum of E and F is equal to M4, and M4 is an integer greater than 1.

27. The apparatus according to claim 23, wherein

the first-type CSI information comprises first CSI measurement information;
the first CSI measurement information is obtained based on Z first interference measurement resources and a plurality of reference signal resources in the channel measurement resource pair associated with the first-type CSI information, and Z is an integer greater than or equal to 1;
the first interference measurement resource is configured by the network device, and the first interference measurement resource has an association relationship with the plurality of reference signal resources in the channel measurement resource pair associated with the first-type CSI information;
the first CSI measurement information comprises rank indicator RI information; and
the RI information has an association relationship with two first RI values, each first RI value is one of the A first parameters, and each first RI value is not equal to any one of the B second parameters.

28. The apparatus according to claim 26, wherein

a first-type CSI report comprises second CSI measurement information;
the second CSI measurement information is obtained based on Z second interference measurement resources and a plurality of reference signal resources in the channel measurement resource pair associated with the first-type CSI information, and Z is an integer greater than or equal to 1;
the second interference measurement resource is configured by the network device, and the second interference measurement resource has an association relationship with the channel measurement resource pair associated with the first-type CSI information, or the second interference measurement resource has an association relationship with the plurality of reference signal resources in the channel measurement resource pair associated with the first-type CSI information;

the second CSI measurement information comprises rank indicator RI information; and

the RI information has an association relationship with a second RI value and a third RI value, the second RI value is equal to one of the A first parameters and not equal to any one of the B second parameters, and the third RI value is equal to one of the C third parameters and not equal to any one of the D fourth parameters.

29. The apparatus according to claim 25, wherein

a first-type CSI report comprises third CSI measurement information;

the third CSI measurement information is obtained based on Z third interference measurement resources and a plurality of reference signal resources in the channel measurement resource pair associated with the first-type CSI information, and Z is an integer greater than or equal to 1;

the third interference measurement resource is configured by the network device, and the third interference measurement resource has an association relationship with the channel measurement resource pair associated with the first-type CSI information, or the third interference measurement resource has an association relationship with the plurality of reference signal resources in the channel measurement resource pair associated with the first-type CSI information;

the third CSI measurement information comprises rank indicator RI information; and

the RI information has an association relationship with two RI values, and the two RI values are equal to a plurality of parameters in one of the P parameter combinations.

30. The apparatus according to claim 26, wherein the second-type CSI information comprises fourth CSI measurement information;

the fourth CSI measurement information is obtained based on Z fourth interference measurement resources and the reference signal resource associated with the second-type CSI information, and Z is an integer greater than or equal to 1;

the fourth CSI measurement information comprises RI information;

the fourth interference measurement resource is configured by the network device, and the fourth interference measurement resource has an association relationship with the reference signal resource associated with the second-type CSI information; and

the RI information has an association relationship with a fourth RI value, the fourth RI value is equal to one of the E fifth parameters and not equal to any one of the F sixth parameters.

31. The apparatus according to any one of claims 21 to 30, wherein the communication unit is a transceiver.

32. A communication apparatus, wherein the apparatus comprises:

a communication unit, configured to send configuration information, wherein the configuration information indicates first rank restriction indication information and second rank restriction indication information;

the first rank restriction indication information is used to obtain first-type CSI information, and the first-type CSI information has an association relationship with a channel measurement resource pair;

the channel measurement resource pair is one of one or more channel measurement resource pairs determined from a reference signal resource set, and the reference signal resource set comprises K reference signal resources, wherein K is an integer greater than or equal to 2;

the second rank restriction indication information is used to obtain second-type CSI information, and the second-type CSI information has an association relationship with one of the K reference signal resources;

the communication unit is further configured to receive a CSI report from a terminal; and

the CSI report comprises the first-type CSI information or the second-type CSI information.

33. The apparatus according to claim 32, wherein the apparatus further comprises:

determining S reference signal resources from the reference signal resource set, wherein S is an integer greater than or equal to 1 and less than K; and

the second-type CSI information has an association relationship with one of the S reference signal resources.

34. The apparatus according to claim 32, wherein the first rank restriction indication information is used to determine A first parameters and/or B second parameters, A and B are integers greater than or equal to 1, a sum of A and B is equal to M1, and M1 is an integer greater than 1.

35. The apparatus according to claim 34, wherein the first rank restriction indication information is further used to determine C third parameters and/or D fourth parameters, C and D are integers greater than or equal to 1, a sum of C and D is equal to M2, and M2 is an integer greater than 1.

36. The apparatus according to claim 32, wherein the first rank restriction indication information is used to determine P parameter combinations, each parameter combination comprises a plurality of parameters, P is an integer greater than or equal to 1, and the plurality of parameters are integers greater than 1 and less than or equal to M3.

37. The apparatus according to any one of claims 32 to 36, wherein the second rank restriction indication information is used to determine E fifth parameters and F sixth parameters, E and F are integers greater than or equal to 1, a sum of E and F is equal to M4, and M4 is an integer greater than 1.

38. The apparatus according to claim 34, wherein

the first-type CSI information comprises first CSI measurement information;
the first CSI measurement information is obtained based on Z first interference measurement resources and a plurality of reference signal resources in the channel measurement resource pair associated with the first-type CSI information, and Z is an integer greater than or equal to 1;
the first interference measurement resource is configured by a network device, and the first interference measurement resource has an association relationship with the plurality of reference signal resources in the channel measurement resource pair associated with the first-type CSI information;
the first CSI measurement information comprises rank indicator RI information; and
the RI information has an association relationship with two first RI values, each first RI value is one of the A first parameters, and each first RI value is not equal to any one of the B second parameters.

39. The apparatus according to claim 37, wherein

a first-type CSI report comprises second CSI measurement information;
the second CSI measurement information is obtained based on Z second interference measurement resources and a plurality of reference signal resources in the channel measurement resource pair associated with the first-type CSI information, and Z is an integer greater than or equal to 1;
the second interference measurement resource is configured by a network device, and the second interference measurement resource has an association relationship with the channel measurement resource pair associated with the first-type CSI information, or the second interference measurement resource has an association relationship with the plurality of reference signal resources in the channel measurement resource pair associated with the first-type CSI information;
the second CSI measurement information comprises rank indicator RI information; and
the RI information has an association relationship with a second RI value and a third RI value, the second RI value is equal to one of the A first parameters and not equal to any one of the B second parameters, and the third RI value is equal to one of the C third parameters and not equal to any one of the D fourth parameters.

40. The apparatus according to claim 36, wherein

a first-type CSI report comprises third CSI measurement information;
the third CSI measurement information is obtained based on Z third interference measurement resources and a plurality of reference signal resources in the channel measurement resource pair associated with the first-type CSI information, and Z is an integer greater than or equal to 1;
the third interference measurement resource is configured by a network device, and the third interference measurement resource has an association relationship with the channel measurement resource pair associated with the first-type CSI information, or the third interference measurement resource has an association relationship with the plurality of reference signal resources in the channel measurement resource pair associated with the first-type CSI information;
the third CSI measurement information comprises rank indicator RI information; and
the RI information has an association relationship with two RI values, and the two RI values are equal to a plurality of parameters in one of the P parameter combinations.

41. The apparatus according to claim 37, wherein the second-type CSI information comprises fourth CSI measurement information;

the fourth CSI measurement information is obtained based on Z fourth interference measurement resources and the reference signal resource associated with the second-type CSI information, and Z is an integer greater than or equal to 1;
the fourth CSI measurement information comprises RI information;
the fourth interference measurement resource is configured by a network device, and the fourth interference measurement resource has an association relationship with the reference signal resource associated with the second-type CSI information; and
the RI information has an association relationship with a fourth RI value, the fourth RI value is equal to one of the E fifth parameters and not equal to any one of the F sixth parameters.

42. The apparatus according to any one of claims 32 to 41, wherein the communication unit is a transceiver.

43. A channel state information reporting method, wherein the method comprises:

obtaining configuration information, wherein the configuration information indicates first codebook subset information and second codebook subset information, the first codebook subset information is associated with a first reference signal resource subset, the second codebook subset information is associated with a second reference signal resource subset, and the first reference signal resource subset and the second reference signal resource subset are respectively associated with different transmission configuration indication states; and
sending a channel state information CSI report to a network device based on the first codebook subset information and the second codebook subset information.

44. The method according to claim 43, wherein the method further comprises:

the configuration information further indicates first rank restriction indication information and second rank restriction indication information;
the first rank restriction indication information is used to obtain rank indicator RI information in first-type CSI information, and the first-type CSI information has an association relationship with a channel measurement resource pair;
the channel measurement resource pair is one of one or more channel measurement resource pairs determined from a reference signal resource set, and the reference signal resource set comprises K reference signal resources, wherein K is an integer greater than or equal to 2;
the second rank restriction indication information is used to obtain RI information in second-type CSI information, and the second-type CSI information has an association relationship with one of the K reference signal resources; and
the CSI report comprises the first-type CSI information or the second-type CSI information.

45. The method according to claim 43 or 44, wherein

the first codebook subset information is used to determine G seventh parameters and H eighth parameters, G and H are integers greater than or equal to 1, and a sum of G and H is equal to M5;
the second codebook subset information is used to determine J ninth parameters and K tenth parameters, J and K are integers greater than or equal to 1, and a sum of J and K is equal to M5; and
M5 is an integer greater than 1, and M5 is determined based on the configuration information.

46. The method according to claim 45, wherein

the CSI report comprises fifth CSI measurement information;
the fifth CSI measurement information is obtained based on Z fifth interference measurement resources and a first reference signal resource and a second reference signal resource in the channel measurement resource pair; and
the fifth interference measurement resource is configured by the network device, the fifth interference measurement resource has an association relationship with the channel measurement resource pair, or the fifth interference measurement resource has an association relationship with the first reference signal resource and the second reference signal resource in the channel measurement resource pair, Z is an integer greater than or equal to 1, the first reference signal resource belongs to the first reference signal resource subset, and the second reference signal resource belongs to the second reference signal resource subset.

**47.** The method according to claim 46, wherein

the fifth CSI measurement information comprises first PMI information and second PMI information;
the first PMI information has an association relationship with one or more of the G seventh parameters, and the first PMI information has no association relationship with any one of the H eighth parameters; and
the second PMI information has an association relationship with one or more ninth parameters in the J eighth parameters, and the second PMI information has no association relationship with any one of the K tenth parameters.

**48.** The method according to claim 45, wherein

the CSI report comprises sixth CSI measurement information;
the sixth CSI measurement information is obtained based on Z sixth interference measurement resources and one reference signal resource in the first reference signal resource subset; and
the sixth interference measurement resource is configured by the network device, the sixth interference measurement resource has an association relationship with the reference signal resource in the first reference signal resource subset, and Z is an integer greater than or equal to 1; and/or
the CSI report comprises seventh CSI measurement information, the seventh CSI measurement information is obtained based on Z seventh interference measurement resources and one reference signal resource in the second reference signal resource subset; and
the seventh interference measurement resource is configured by the network device, the seventh interference measurement resource has an association relationship with the reference signal resource in the first reference signal resource subset, and Z is an integer greater than or equal to 1.

**49.** The method according to claim 48, wherein

the sixth CSI measurement information comprises third PMI information, the third PMI information has an association relationship with one or more of the G seventh parameters, and the third PMI information has no association relationship with any one of the H eighth parameters; and/or
the seventh CSI measurement information comprises fourth PMI information, the fourth PMI information has an association relationship with one or more ninth parameters in the J eighth parameters, and the fourth PMI information has no association relationship with any one of the K tenth parameters.

**50.** A channel state information reporting method, wherein the method comprises:

sending configuration information, wherein the configuration information indicates first codebook subset information and second codebook subset information, the first codebook subset information is associated with a first reference signal resource subset, the second codebook subset information is associated with a second reference signal resource subset, and the first reference signal resource subset and the second reference signal resource subset are respectively associated with different transmission configuration indication states; and
receiving a channel state information CSI report from a terminal based on the first codebook subset information and the second codebook subset information.

**51.** The method according to claim 50, wherein the method further comprises:

the configuration information further indicates first rank restriction indication information and second rank restriction indication information;
the first rank restriction indication information is used to obtain RI information in first-type CSI information, and the first-type CSI information has an association relationship with a channel measurement resource pair;
the channel measurement resource pair is one of one or more channel measurement resource pairs determined from a reference signal resource set, and the reference signal resource set comprises K reference signal resources, wherein K is an integer greater than or equal to 2;
the second rank restriction indication information is used to obtain RI information in second-type CSI information, and the second-type CSI information has an association relationship with one of the K reference signal resources; and

the CSI report comprises the first-type CSI information or the second-type CSI information.

52. The method according to claim 50 or 51, wherein

the first codebook subset information is used to determine G seventh parameters and H eighth parameters, G and H are integers greater than or equal to 1, and a sum of G and H is equal to M5;

the second codebook subset information is used to determine J ninth parameters and K tenth parameters, J and K are integers greater than or equal to 1, and a sum of J and K is equal to M5; and

M5 is an integer greater than 1, and M5 is determined based on the configuration information.

53. The method according to claim 52, wherein

the CSI report comprises fifth CSI measurement information;

the fifth CSI measurement information is obtained based on Z fifth interference measurement resources and a first reference signal resource and a second reference signal resource in the channel measurement resource pair; and

the fifth interference measurement resource is configured by a network device, the fifth interference measurement resource has an association relationship with the channel measurement resource pair, or the fifth interference measurement resource has an association relationship with the first reference signal resource and the second reference signal resource in the channel measurement resource pair, Z is an integer greater than or equal to 1, the first reference signal resource belongs to the first reference signal resource subset, and the second reference signal resource belongs to the second reference signal resource subset.

54. The method according to claim 53, wherein

the fifth CSI measurement information comprises first PMI information and second PMI information;

the first PMI information has an association relationship with one or more of the G seventh parameters, and the first PMI information has no association relationship with any one of the H eighth parameters; and

the second PMI information has an association relationship with one or more ninth parameters in the J eighth parameters, and the second PMI information has no association relationship with any one of the K tenth parameters.

55. The method according to claim 52, wherein

the CSI report comprises sixth CSI measurement information;

the sixth CSI measurement information is obtained based on Z sixth interference measurement resources and one reference signal resource in the first reference signal resource subset; and

the sixth interference measurement resource is configured by a network device, the sixth interference measurement resource has an association relationship with the reference signal resource in the first reference signal resource subset, and Z is an integer greater than or equal to 1; and/or

the CSI report comprises seventh CSI measurement information, the seventh CSI measurement information is obtained based on Z seventh interference measurement resources and one reference signal resource in the second reference signal resource subset; and

the seventh interference measurement resource is configured by a network device, the seventh interference measurement resource has an association relationship with the reference signal resource in the first reference signal resource subset, and Z is an integer greater than or equal to 1.

56. The method according to claim 55, wherein

the sixth CSI measurement information comprises third PMI information, the third PMI information has an association relationship with one or more of the G seventh parameters, and the third PMI information has no association relationship with any one of the H eighth parameters; and/or

the seventh CSI measurement information comprises fourth PMI information, the fourth PMI information has an association relationship with one or more ninth parameters in the J eighth parameters, and the fourth PMI information has no association relationship with any one of the K tenth parameters.

57. A communication apparatus, wherein the apparatus comprises:

a communication unit, configured to obtain configuration information, wherein the configuration information indicates first codebook subset information and second codebook subset information, the first codebook subset information is associated with a first reference signal resource subset, the second codebook subset information is associated with a second reference signal resource subset, and the first reference signal resource subset and the second reference signal resource subset are respectively associated with different transmission configuration indication states; and

the communication unit is further configured to send a channel state information CSI report to a network device based on the first codebook subset information and the second codebook subset information.

58. The apparatus according to claim 57, wherein

the configuration information further indicates first rank restriction indication information and second rank restriction indication information;

the first rank restriction indication information is used to obtain rank indicator RI information in first-type CSI information, and the first-type CSI information has an association relationship with a channel measurement resource pair;

the channel measurement resource pair is one of one or more channel measurement resource pairs determined from a reference signal resource set, and the reference signal resource set comprises K reference signal resources, wherein K is an integer greater than or equal to 2;

the second rank restriction indication information is used to obtain RI information in second-type CSI information, and the second-type CSI information has an association relationship with one of the K reference signal resources; and

the CSI report comprises the first-type CSI information or the second-type CSI information.

59. The apparatus according to claim 57 or 58, wherein

the first codebook subset information is used to determine G seventh parameters and H eighth parameters, G and H are integers greater than or equal to 1, and a sum of G and H is equal to M5;

the second codebook subset information is used to determine J ninth parameters and K tenth parameters, J and K are integers greater than or equal to 1, and a sum of J and K is equal to M5; and

M5 is an integer greater than 1, and M5 is determined based on the configuration information.

60. The apparatus according to claim 59, wherein

the CSI report comprises fifth CSI measurement information;

the fifth CSI measurement information is obtained based on Z fifth interference measurement resources and a first reference signal resource and a second reference signal resource in the channel measurement resource pair; and

the fifth interference measurement resource is configured by the network device, the fifth interference measurement resource has an association relationship with the channel measurement resource pair, or the fifth interference measurement resource has an association relationship with the first reference signal resource and the second reference signal resource in the channel measurement resource pair, Z is an integer greater than or equal to 1, the first reference signal resource belongs to the first reference signal resource subset, and the second reference signal resource belongs to the second reference signal resource subset.

61. The apparatus according to claim 60, wherein

the fifth CSI measurement information comprises first PMI information and second PMI information;

the first PMI information has an association relationship with one or more of the G seventh parameters, and the first PMI information has no association relationship with any one of the H eighth parameters; and

the second PMI information has an association relationship with one or more ninth parameters in the J eighth parameters, and the second PMI information has no association relationship with any one of the K tenth parameters.

62. The apparatus according to claim 59, wherein

the CSI report comprises sixth CSI measurement information;
the sixth CSI measurement information is obtained based on Z sixth interference measurement resources and one reference signal resource in the first reference signal resource subset; and
the sixth interference measurement resource is configured by the network device, the sixth interference measurement resource has an association relationship with the reference signal resource in the first reference signal resource subset, and Z is an integer greater than or equal to 1; and/or
the CSI report comprises seventh CSI measurement information, the seventh CSI measurement information is obtained based on Z seventh interference measurement resources and one reference signal resource in the second reference signal resource subset; and
the seventh interference measurement resource is configured by the network device, the seventh interference measurement resource has an association relationship with the reference signal resource in the first reference signal resource subset, and Z is an integer greater than or equal to 1.

63. The apparatus according to claim 62, wherein

the sixth CSI measurement information comprises third PMI information, the third PMI information has an association relationship with one or more of the G seventh parameters, and the third PMI information has no association relationship with any one of the H eighth parameters; and/or
the seventh CSI measurement information comprises fourth PMI information, the fourth PMI information has an association relationship with one or more ninth parameters in the J eighth parameters, and the fourth PMI information has no association relationship with any one of the K tenth parameters.

64. The apparatus according to any one of claims 57 to 63, wherein the communication unit is a transceiver.

65. A communication apparatus, wherein the apparatus comprises:

a communication unit, configured to send configuration information, wherein the configuration information indicates first codebook subset information and second codebook subset information, the first codebook subset information is associated with a first reference signal resource subset, the second codebook subset information is associated with a second reference signal resource subset, and the first reference signal resource subset and the second reference signal resource subset are respectively associated with different transmission configuration indication states; and
the communication unit is further configured to receive a channel state information CSI report from a terminal based on the first codebook subset information and the second codebook subset information.

66. The apparatus according to claim 65, wherein

the configuration information further indicates first rank restriction indication information and second rank restriction indication information;
the first rank restriction indication information is used to obtain first-type CSI information, and the first-type CSI information has an association relationship with a channel measurement resource pair;
the channel measurement resource pair is one of one or more channel measurement resource pairs determined from a reference signal resource set, and the reference signal resource set comprises K reference signal resources, wherein K is an integer greater than or equal to 2;
the second rank restriction indication information is used to obtain second-type CSI information, and the second-type CSI information has an association relationship with one of the K reference signal resources; and
the CSI report comprises the first-type CSI information or the second-type CSI information.

67. The apparatus according to claim 65 or 66, wherein

the first codebook subset information is used to determine G seventh parameters and H eighth parameters, G and H are integers greater than or equal to 1, and a sum of G and H is equal to M5;
the second codebook subset information is used to determine J ninth parameters and K tenth parameters, J and K are integers greater than or equal to 1, and a sum of J and K is equal to M5; and
M5 is an integer greater than 1, and M5 is determined based on the configuration information.

68. The apparatus according to claim 67, wherein

the CSI report comprises fifth CSI measurement information;

the fifth CSI measurement information is obtained based on Z fifth interference measurement resources and a first reference signal resource and a second reference signal resource in the channel measurement resource pair; and

the fifth interference measurement resource is configured by a network device, the fifth interference measurement resource has an association relationship with the channel measurement resource pair, or the fifth interference measurement resource has an association relationship with the first reference signal resource and the second reference signal resource in the channel measurement resource pair, Z is an integer greater than or equal to 1, the first reference signal resource belongs to the first reference signal resource subset, and the second reference signal resource belongs to the second reference signal resource subset.

69. The apparatus according to claim 68, wherein

the fifth CSI measurement information comprises first PMI information and second PMI information;

the first PMI information has an association relationship with one or more of the G seventh parameters, and the first PMI information has no association relationship with any one of the H eighth parameters; and

the second PMI information has an association relationship with one or more ninth parameters in the J eighth parameters, and the second PMI information has no association relationship with any one of the K tenth parameters.

70. The apparatus according to claim 67, wherein

the CSI report comprises sixth CSI measurement information;

the sixth CSI measurement information is obtained based on Z sixth interference measurement resources and one reference signal resource in the first reference signal resource subset; and

the sixth interference measurement resource is configured by a network device, the sixth interference measurement resource has an association relationship with the reference signal resource in the first reference signal resource subset, and Z is an integer greater than or equal to 1; and/or

the CSI report comprises seventh CSI measurement information, the seventh CSI measurement information is obtained based on Z seventh interference measurement resources and one reference signal resource in the second reference signal resource subset; and

the seventh interference measurement resource is configured by a network device, the seventh interference measurement resource has an association relationship with the reference signal resource in the first reference signal resource subset, and Z is an integer greater than or equal to 1.

71. The apparatus according to claim 70, wherein

the sixth CSI measurement information comprises third PMI information, the third PMI information has an association relationship with one or more of the G seventh parameters, and the third PMI information has no association relationship with any one of the H eighth parameters; and/or

the seventh CSI measurement information comprises fourth PMI information, the fourth PMI information has an association relationship with one or more ninth parameters in the J eighth parameters, and the fourth PMI information has no association relationship with any one of the K tenth parameters.

72. The apparatus according to any one of claims 65 to 71, wherein the communication unit is a transceiver.

73. A communication apparatus, comprising:

a memory, configured to store a computer program; and

a processor, configured to execute the computer program stored in the memory, to perform the method according to any one of claims 1 to 10, perform the method according to any one of claims 11 to 20, perform the method according to any one of claims 43 to 49, or perform the method according to any one of claims 50 to 56.

74. A communication apparatus, comprising at least one processor, wherein the at least one processor is coupled to at least one memory, and the at least one processor is configured to execute a computer program or instructions stored in the at least one memory, so that the method according to any one of claims 1 to 10 is implemented, the method according to any one of claims 11 to 20 is implemented, the method according to any one of claims 43 to 49 is implemented, or the method according to any one of claims 50 to 56 is implemented.

**75.** The communication apparatus according to claim 73 or 74, wherein the communication apparatus is a chip or a chip system.

**76.** A computer-readable storage medium, comprising instructions, wherein when the instructions are run on a computer, the computer is enabled to perform the method according to any one of claims 1 to 10, perform the method according to any one of claims 11 to 20, perform the method according to any one of claims 43 to 49, or perform the method according to any one of claims 50 to 56.

**77.** A computer program product, wherein the computer program product comprises a computer program or instructions, and when the computer program or the instructions is or are run on a computer, the method according to any one of claims 1 to 10 is implemented, the method according to any one of claims 11 to 20 is implemented, the method according to any one of claims 43 to 49 is implemented, or the method according to any one of claims 50 to 56 is implemented.

FIG. 1

TRP 1

TRP 2

DCI 1

DCI 2

Data 1

Data 2

Terminal device

Downlink data channel          Downlink control channel

TRP: transmission reception point
DCI: downlink control information
Date: data

FIG. 2a

TRP 1

TRP 2

DCI 1

Data 1

Data 2

Terminal device

Downlink data channel          Downlink control channel

TRP: transmission reception point
DCI: downlink control information
Date: data

FIG. 2b

CSI reporting method 100

| Network device | | Terminal device |
|---|---|---|

S101: Send first configuration information, where the first configuration information indicates first rank restriction indication information and second rank restriction indication information

S102: Receive the first configuration information

S103: Send a CSI report, where the CSI report includes first-type CSI information or second-type CSI information

S104: The network device receives the CSI report

FIG. 3

CSI reporting method 200

| Network device | | Terminal device |

S201: Send second configuration information, where the first configuration information indicates first rank restriction indication information and second rank restriction indication information

S202: Receive the second configuration information

S203: The terminal sends a CSI report to the network device based on first codebook subset information and second codebook subset information

S204: The network device receives the CSI report

FIG. 4

Communication apparatus 500

Communication unit — 501

Processing unit — 502

Storage unit — 503

FIG. 5

Communication apparatus 600

Processor 601

Instructions 603

Memory 602

Instructions 604

Transceiver 605

Antenna 606

FIG. 6

Chip 700

Memory 703

Processor 701

Interface 702

FIG. 7

## INTERNATIONAL SEARCH REPORT

| International application No. |
| --- |
| **PCT/CN2022/085171** |

**A. CLASSIFICATION OF SUBJECT MATTER**

H04B 7/06(2006.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNTXT; VEN; WPABSC; ENTXTC; WPABS; ENTXT; WOTXT; CNKI; 3GPP: 秩, 信道状态指示, 限制, 受限, 约束, 码本子集, 多TRP, 单TRP, RI, rank, restriction, CSI, multi-TRP, MTRP, NCJT, single-TRP, STRP, codebook subset, CSI report, CBSR

**C. DOCUMENTS CONSIDERED TO BE RELEVANT**

| Category* | Citation of document, with indication, where appropriate, of the relevant passages | Relevant to claim No. |
| --- | --- | --- |
| Y | CN 109391404 A (TELECOMMUNICATIONS TECHNOLOGY RESEARCH INSTITUTE CO., LTD.) 26 February 2019 (2019-02-26) <br> description, paragraphs [0010]-[0184] | 1, 2, 5, 9, 11, 12, 15, 19, 21, 22, 25, 29, 31-33, 36, 40, 42-44, 50, 51, 57, 58, 64-66, 72-77 |
| Y | CN 111901016 A (ZTE CORP.) 06 November 2020 (2020-11-06) <br> description, paragraphs [0055]-[0192] | 1, 2, 5, 9, 11, 12, 15, 19, 21, 22, 25, 29, 31-33, 36, 40, 42, 44, 51, 58, 64, 66, 72-77 |
| Y | NEC. "Discussion on CSI Enhancement for Multi-TRP Transmission" <br> *3GPP TSG RAN WG1 #104-e e-Meeting R1-2100954*, 19 January 2021 (2021-01-19), <br><br> sections 1-3 | 1, 2, 5, 9, 11, 12, 15, 19, 21, 22, 25, 29, 31-33, 36, 40, 42-44, 50, 51, 57, 58, 64-66, 72-77 |
| A | US 2020186207 A1 (INTEL CORP.) 11 June 2020 (2020-06-11) <br> entire document | 1-77 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 June 2022** | **23 June 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/085171**

| Patent document cited in search report | | | Publication date (day/month/year) | Patent family member(s) | | | Publication date (day/month/year) |
|---|---|---|---|---|---|---|---|
| CN | 109391404 | A | 26 February 2019 | WO | 2019029461 | A1 | 14 February 2019 |
| | | | | CN | 109391404 | B | 09 February 2021 |
| CN | 111901016 | A | 06 November 2020 | | None | | |
| US | 2020186207 | A1 | 11 June 2020 | DE | 112018000196 | T5 | 05 September 2019 |
| | | | | CN | 110999106 | A | 10 April 2020 |
| | | | | EP | 3635876 | A1 | 15 April 2020 |
| | | | | WO | 2018226581 | A1 | 13 December 2018 |
| | | | | US | 10924163 | B2 | 16 February 2021 |

Form PCT/ISA/210 (patent family annex) (January 2015)

**REFERENCES CITED IN THE DESCRIPTION**

**Patent documents cited in the description**

- CN 202110363922